# FASCICULE DE BREVET EUROPEEN

(11) **EP 1 695 606 B1**
(45) Date de publication et mention de la délivrance du brevet: **23.09.2009**
(21) Numéro de dépôt: 06110133.3
(22) Date de dépôt: 17.02.2006
(51) Int. Cl.: A01B 79/00

(54) **Procédé d'optimisation et d'adjustement de l'épandage, machine d'épandage et programme d'ordinateur correspondants**
Verfahren zur Optimierung und Einstellung des Streuens, zugehörige Streuer und Computerprogramm
Process for the optimisation and adjustment of scattering, scattering machine and corresponding computer programm

(30) Priorité: 25.02.2005 FR 0501975
(43) Date de publication de la demande: 30.08.2006
(73) Titulaire: SULKY-BUREL S.A.S, 35220 Chateaubourg (FR); CEMAGREF (Centre National du Machinisme Agricole du Génie Rural, des Eaux et des Forêts), 92163 Antony Cedex (FR)
(72) Inventeur: LEVEILLE, Lionel, 35220, SAINT-DIDIER (FR); PIRON, Emmanuel, 03300, CREUZIER LE VIEUX (FR)
(74) Mandataire: Bioret, Ludovic

(56) Documents cités:
- EP-A- 0 917 816
- EP-A- 1 402 766
- DE-A1- 19 835 487
- FR-A- 2 772 550

## Description

### 1. Domaine de l'invention

Le domaine de l'invention est celui de l'épandage de produits, par exemple d'engrais ou de semis, notamment sous une forme granulaire.

Plus précisément, l'invention concerne le contrôle de l'épandage assuré par une machine d'épandage agricole, et plus particulièrement l'optimisation des doses de particules affectées aux différentes zones d'une parcelle à traiter, pour une bonne adéquation avec les besoins réels en quantité de chaque zone.

Si l'invention trouve une forte justification dans le domaine de l'agriculture et plus précisément dans le domaine de l'agriculture de précision, l'application de l'invention à ces domaines ne doit pas être considérée par le lecteur comme limitative, l'invention pouvant également s'appliquer dans d'autres branches de l'industrie pouvant nécessiter le traitement d'une surface prédéterminée au moyen d'un épandage et/ou d'une irrigation de précision, en fonction d'un ensemble de contraintes de environnementales données.

### 2. État de la technique

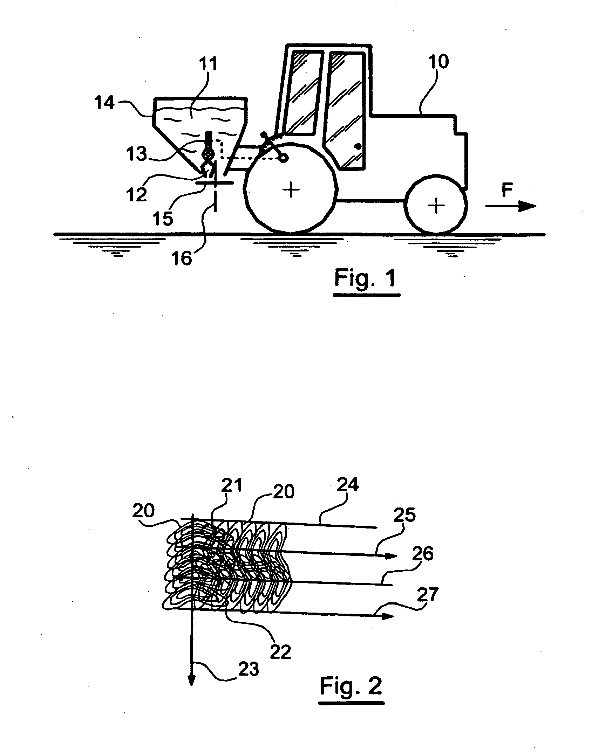

Dans les domaines de l'agriculture et notamment de l'agriculture de précision, les machines servant à épandre de l'engrais ou des semis sur une parcelle cultivable, se présentent généralement sous la forme d'un tracteur 10 portant une trémie 11 contenant l'engrais ou le semis 14 à épandre, comme illustré sur la figure 1.

Selon une technique classique, le fond de la trémie 11 comprend au moins une ouverture 12 se présentant sous la forme d'une goulotte 13 laissant passer le contenu 14 de la trémie 11 en surplomb d'un distributeur comprenant au moins un disque rotatif 15 portant des pales de projection. Les disques 15 sont le plus souvent disposés dans une position sensiblement horizontale et leur rotation autour d'un axe 16 sensiblement vertical favorise la projection du contenu 14 de la trémie par effet centrifuge, sous la forme d'une nappe s'étendant transversalement à l'arrière de la machine d'épandage.

Classiquement, les distributeurs équipant les machines d'épandage du domaine de l'agriculture utilisent au moins deux disques rotatifs tournant en sens inverses l'un par rapport à l'autre, une telle configuration permettant de réaliser un épandage en engrais et/ou en semis sur une grande largeur, généralement comprise entre 5 et 40 mètres, en fonction des paramètres de commande transmis au distributeur.

De telles machines d'épandage permettent de traiter une parcelle de terrain cultivable, le plus généralement par trajet prédéfini d'aller/retour sur celle-ci.

L'épandage est donc réalisé durant chaque trajet de la machine sur une bande d'une largeur prédéterminée, éventuellement modifiable, laquelle doit venir légèrement en chevauchement de la bande adjacente pour pallier la diminution de la densité en particules de la nappe d'épandage qu'il est possible de constater sur les bords de chaque bande traitée.

L'utilisation de telles machines s'avèrent cependant limitée et peu optimale dans un contexte lié à l'agriculture de précision dans lequel les doses réelles à épandre sur le sol d'une parcelle cultivable doivent tenir compte de consignes optimisées et préalablement établies, lesquelles doivent être en parfaite conformité avec les contraintes environnementales, ou encore avec les besoins réels estimés en semis ou en engrais pour le sol ou la culture de la parcelle.

Pour tendre vers une optimisation des doses de produits ou de particules (engrais ou semis) à épandre en différents points ou en différentes zones d'une parcelle à traiter, on connaît de l'art antérieur, notamment dans les documents de brevet n° EP 0 726 024, EP 0 761 084, EP 0 917 816, ou encore EP 1 181 857, des solutions consistant en une machine d'épandage centrifuge apte à prendre en compte des données d'une carte d'application préalablement mémorisée.

Ces machines d'épandage convertissent une dose consigne préalablement calculée et mémorisée sous la forme d'une carte de la parcelle à traiter, en une dose réelle délivrée sur le sol lors du passage de la machine d'épandage. Le pilotage du distributeur utilisé par la machine d'épandage (variation de la vitesse de rotation et/ou de l'inclinaison des disques rotatifs du distributeur, par exemple) est ainsi réalisé pendant le déplacement de la machine d'épandage sur la parcelle, de façon que la dose réellement délivrée corresponde sensiblement à la dose consigne prédéterminée.

Par exemple, dans le document de brevet n°EP 0 917 816, la solution préconisée repose sur une optimisation des caractéristiques physiques de distribution de la machine d'épandage et plus précisément de son distributeur, en fonction d'un trajet de la machine d'épandage préalablement déterminé par l'exploitant, et des doses consignes associées à ce trajet.

Une autre solution technique connue de l'art antérieur est donnée dans le document de brevet n° EP 0 726 024, laquelle permet d'anticiper le changement de la dose réelle à épandre à un instant donnée lors du déplacement de la machine d'épandage sur la parcelle à traiter en fonction de données acquises en temps réel relatives à la vitesse de déplacement et au positionnement géographique de la machine d'épandage sur ladite parcelle.

Une telle solution permet également un ajustement en continu, au cours du déplacement de la machine d'épandage, de la largeur de travail et du débit d'épandage en sortie du distributeur de particules (engrais, semis, etc.), en fonction de la position géographique réelle de ladite machine et relativement au contraintes relatives à la parcelle (proximité de la limite de parcelle, etc.).

Une dernière solution connue de l'art antérieur est donnée dans le document de brevet n° EP 0 761 084. Elle s'appuie sur un tramage préliminaire de la parcelle à traiter sous la forme d'une carte d'application et sur l'établissement d'un fichier de travail tenant compte des contraintes physiques et/ou mécaniques du distributeur utilisé et d'un trajet optimal prédéterminé que la machine d'épandage équipée du distributeur devra réellement emprunter sur la parcelle, ce trajet étant mémorisé relativement au tramage de la carte d'application.

Ensuite, durant son trajet sur la parcelle à traiter la machine d'épandage transmet aux organes de commande du distributeurs les informations de paramétrage provenant du fichier de travail préalablement mémorisées et correspondant à la position géographique réelle de ladite machine, de façon que la dose à délivrée à un instant donné en au moins un point de ladite parcelle corresponde effectivement à la dose consigne préalablement déterminée.

Dans toutes ces solutions connues de l'art antérieur visant à l'optimisation de la consigne d'épandage réellement délivrée en tous points, un premier inconvénient majeur est le manque de précision, puisqu'on pilote à un instant donné les composantes techniques du distributeur, notamment celles relatives au débit et à la largeur transversale de travail, en considérant que la distribution est rectiligne et homogène.

De plus, toutes ces solutions se contentent de capturer la position géographique de la machine d'épandage à un instant donné lorsque celle-ci est en travail sur la parcelle à traiter, de la mettre en correspondance avec la carte des doses consignes se présentant sous la forme d'un maillage de la parcelle, de façon à déterminer la valeur de la dose consigne que le distributeur doit libérer à cet instant.

Classiquement, on prend en compte la dose nécessaire au milieu de la largeur de travail, même si une dose inférieure ou supérieure est nécessaire ailleurs.

Ces solutions utilisent donc un procédé de calcul de la dose consigne qui s'avère imprécis. Cet inconvénient se trouve d'autant plus accentué dans les régions frontalières situées entre les zones (mailles) nécessitant un plus fort dosage de particules (semis ou engrais) et les zones (mailles) nécessitant un tel dosage en particules inférieur, lorsque ces zones (mailles) sont traversées par un trajet de la machine d'épandage. En effet, dans ces régions frontalières entre des zones à traiter nécessitant des dosages différents, les méthodes précitées permettent d'appliquer uniquement une très faible dose de particules.

Dans toutes ces solutions connues de l'art antérieur, un premier inconvénient majeur est le manque de précision, puisqu'on pilote à un instant donné les composantes techniques du distributeur

En outre, un deuxième inconvénient de ces techniques de l'art antérieur visant à l'optimisation de la consigne d'épandage réellement délivrée en tous points concerne l'amplification de ce manque de précision de la consigne réellement délivrée. En effet, la dose consigne en chaque point de la parcelle au moment de l'épandage est systématiquement délivrée uniquement en fonction de la position géographique de la machine d'épandage à un instant donné et de la dose consigne correspondante mémorisé pour cette position géographique instantanée sur une carte de consignes à affecter à la parcelle.

En conséquence, il n'est pas possible de minimiser automatiquement les éventuels défauts de surdosage ou de sous dosage de la consigne réelle provoqués par les variations de trajectoires imprévisibles et les variation de mouvements intempestifs et irréguliers de la machine d'épandage qui subit la réalité du jalonnage du terrain au moment de son déplacement.

### 3. Objectifs de l'invention

L'invention a notamment pour objectif de pallier ces divers inconvénients de l'état de la technique.

Plus précisément, un objectif de l'invention est de fournir une technique permettant d'optimiser la gestion de la dose consigne que le distributeur doit réellement délivrer en tout point de la parcelle à traiter lors de l'épandage réalisé pendant le déplacement de la machine du même type, y compris dans les régions de la parcelle situées à la frontière des zones (mailles) nécessitant un plus fort dosage (semis ou engrais) et des zones (mailles) nécessitant un tel dosage en particules inférieur.

Un autre objectif de l'invention est de fournir un tel procédé qui n'introduise pas de biais dans le calcul ou la gestion de l'optimisation de la gestion de la dose consigne, c'est-à-dire qui ne prenne en compte que des paramètres qui soient conformes aussi bien à la réalité des composants techniques propres au distributeur ou à la machine d'épandage, qu'à la réalité de la position géographique de la machine durant l'épandage, ou encore à la réalité de la forme de la nappe d'épandage, sans introduire de quelconques hypothèses et/ou approximations.

Un objectif supplémentaire de l'invention est de fournir un tel procédé qui permette de délivrer une dose consigne réelle qui, en tous points de la parcelle à traiter, soit parfaitement conforme à la consigne optimale préalablement calculée.

Un autre objectif de l'invention est de fournir un tel procédé qui soit capable de gérer et d'anticiper les paramètres concernant les consignes réelles d'épandage en temps réel, en fonction des contraintes de jalonnage de la parcelle à traiter.

Encore un objectif de l'invention est de fournir un tel procédé qui soit apte à prendre en compte les éventuelles contraintes de superposition de salves d'engrais ou de semis, ou bien encore de tout autre type de produit d'épandage de forme liquide, poudreuse ou granuleuse, pour ajuster les caractéristiques de l'épandage de façon que la dose réelle finalement délivrée en tous points de la parcelle soit parfaitement conforme à la dose consigne optimisée.

Un autre objectif de l'invention est de fournir un tel procédé qui soit ergonomique, c'est-à-dire à la fois simple d'utilisation, de compréhension et de mise en oeuvre pour un manipulateur (un exploitant agricole, par exemple) même faiblement expérimenté.

Encore un autre objectif de l'invention est de fournir un tel procédé qui soit peu gourmand en temps et en puissance de calcul, tout en restant de coût raisonnable.

Un dernier objectif de l'invention est de proposer un tel procédé pouvant être exploité en temps réel à bord de la machine d'épandage, directement en cours d'épandage, sans besoin nécessaire d'un pré calcul préalablement réalisé à la ferme, et sans besoin d'une puissance de calcul extraordinaire, un simple ordinateur ou assistant personnel de bord devant suffire.

### 4. Résumé de l'invention

Ces objectifs, ainsi que d'autres qui apparaîtront par la suite, sont atteints selon l'invention à l'aide d'un procédé de contrôle de l'épandage selon la revendication 1.

Il est donc important de souligner que lors de la première étape d'épandage en mode plein champ, aucune optimisation de l'épandage n'est nécessaire, à l'exception des zones situées en début et en fin de trajet d'épandage, ou en bordure de parcelle (Cf. description de cet aspect ci-après).

Ainsi, selon l'invention, on réalise un relevé intraparcellaire des quantités d'engrais déjà présentes (épandues lors de l'apport en cours ou précédemment) en vue de diagnostiquer les paramètre de distribution spatiale d'épandage (réglages de la largeur de travail Lw, du débit, etc. par exemple).

Cette opération est réalisée localement, dans une région géographique prédéterminée sous la forme d'une fenêtre 50 d'exploration (ou « transect »), et transversalement à l'axe 51 d'avancement du distributeur.

Dans un exemple de réalisation donné à titre de simple exemple illustratif et non limitatif, la « fenêtre » 50 transversale, ou « transect », mesure par exemple cent mètres perpendiculairement à l'avancement, et dix mètres longitudinalement à l'avancement.

Un tel procédé selon l'invention comprend avantageusement une étape d'optimisation des consignes, selon laquelle on associe à chaque point (34) d'un trajet (35) une consigne intermédiaire, de telle façon qu'à la fin du traitement de la parcelle, la consigne globale (37) réellement délivrée correspond à la somme des consignes intermédiaires obtenue par cumul en recouvrement en chaque point donné de la parcelle d'au moins deux salves de particules réalisées par le distributeur, à des instants différents et/ou suivant des trajets différents.

Préférentiellement, selon un tel procédé la consigne tient compte d'au moins une information représentative de la forme (301, 302) de la nappe d'épandage et/ou d'au moins une différence de densité (37) particules en différents points de la nappe.

Ainsi et de façon avantageuse, le procédé selon l'invention contrôle l'épandage au moyen des étapes préparatoires suivantes :
- étape 1 : obtention de la carte prédéterminée, sous la forme d'une série de doses consignes affectées à chaque maille d'une représentation de la parcelle découpée en mailles de dimensions prédéterminées;
- étape 2 : obtention d'au moins une représentation spatiale et de densité de la nappe d'épandage associée au type du distributeur utilisé ;
- étape 3 : modélisation d'au moins trajet optimal devant être effectué par la machine d'épandage dans la parcelle, sous la forme de points correspondants à des positions géographiques successives ;
- étape 4: détermination pour chacune des positions géographiques successives, des paramètres optimaux de forme et de densité de la nappe permettant de définir à un instant donné au moins une dose consigne intermédiaire affectée à au moins une partie d'une maille couverte par la nappe.

Ces différentes étapes préparatoires ont pour objectif avantageux qu'à l'issue du traitement de l'ensemble de la parcelle, les cumuls des consignes intermédiaires en tout point des mailles soient sensiblement égaux à la valeur des consignes des mailles respectivement.

Préférentiellement, l'ensemble des doses déjà épandues est acquis en temps continu lors du déplacement de ladite machine d'épandage, sous la forme d'une matrice, dite « matrice champ », laquelle associe à chaque points de coordonnées GPS d'une pluralité de points de coordonnées GPS entourant chaque trajet 53 de ladite machine d'épandage sur la parcelle 500 à traiter, les sommes successives desdites doses consignes intermédiaires déjà épandues en chaque point de ladite pluralité de points de coordonnées GPS.

On en déduit 52 alors au moyen des différents « transects » réalisé au cours du déplacement de la machine d'épandage sur un trajet 53 d'épandage, un relevé 54 transversal des quantités de matière d'épandage (engrais par exemple) déjà présente sur la parcelle 500 à l'intérieur de chaque fenêtre 50 glissante défmie autour de l'axe d'avancement, dont la position au niveau de l'axe 55 (longueur en mètres de la fenêtre transect) des abscisses du relevé 54, est défmie par le référentiel « zéro » (56).

Avantageusement, chaque maille de ladite matrice champ est représentative de la somme desdites zones consignes intermédiaires affectée à une maille carrée d'un mètre sur un mètre dans le champ, de façon à fournir une matrice d'épandage. Il est bien entendu que toutes autres dimensions de maille peut être adopté de façon non restrictive ou limitative.

De façon préférentielle, à chaque trajet suivi par ladite machine d'épandage sur ladite parcelle, on réalise en continu en cours de déplacement de la dite machine d'épandage un relevé des quantités de matière déjà épandues sur ladite parcelle, transversalement à l'axe de déplacement du distributeur de ladite machine d'épandage.

De façon avantageuse, ledit relevé est réalisé localement, au voisinage d'une succession de points de coordonnées GPS d'un trajet de déplacement de ladite machine d'épandage sur ladite parcelle à traiter, ledit voisinage se présentant sous la forme d'une fenêtre glissante de longueur et de largeur prédéterminées relativement audit axe d'avancement, dite « fenêtre transect » perpendiculaire à l'axe d'avancement dudit distributeur.

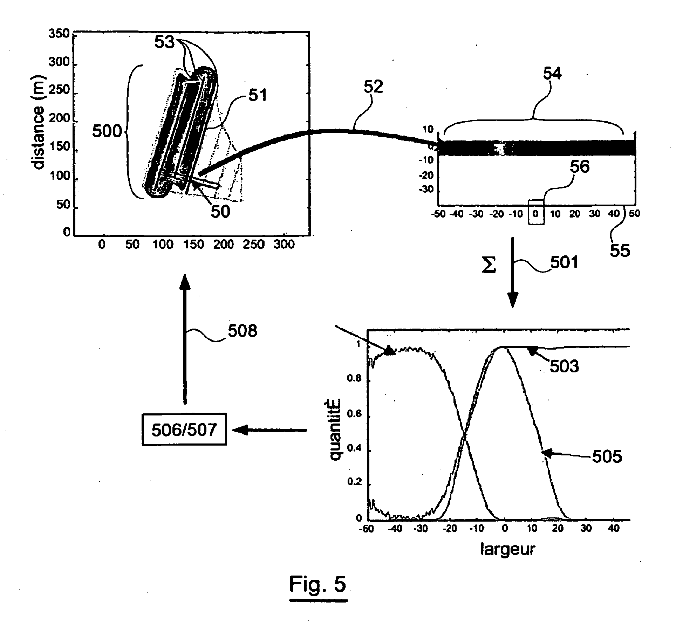

Préférentiellement selon cette variante de mise en oeuvre du procédé d'optimisation de l'épandage selon l'invention, durant chaque trajet en cours, on effectue les étapes suivantes représentées sur la figure 5 :
■ étape a) extraction d'une matrice 50 d'exploration à chaque nouveau point de coordonnées GPS détecté ;
■ étape b) sommation 501, colonne par colonne des quantités de matière déjà épandues sur ladite parcelle lors du trajet en cours ou lors d'au moins un trajet précédent au moyen d'au moins un relevé 54 correspondant à une fenêtre transect 50 ;
■ étape c) détermination 502 du complément théorique 503 à apporter à chaque maille de ladite matrice champ, pour atteindre la dose consigne optimale prédéterminée an chaque point de ladite parcelle 500;
■ étape d) détermination 504 d'une courbe 505 transversale permettant de minimiser la différence entre ledit complément théorique 503 déterminé et la dose consigne réelle pouvant être réellement délivrée lors d'un trajet suivant en fonction des caractéristiques physiques dudit distributeur ;
■ étape e) extraction 506 et mémorisation 507 des paramètres physiques de réglage de l'épandage à appliquer audit distributeur lors d'un passage sur ledit trajet en tenant compte de la quantité 508 de matière épandue déjà présente le long d'une ligne perpendiculaire à l'axe 51 d'avancement du distributeur en un point donné de la trajectoire suivie par la machine d'épandage, du complément théorique 503 pour atteindre la dose consigne et de la courbe 505 transversale. Ainsi, l'ajustement des paramètres de réglage de la machine d'épandage lors d'un passage N d'un trajet donné s'effectue en tenant compte des paramètres acquis lors d'un passage N-1 sur le même trajet ;
■ étape f) mise à jour de ladite matrice champ à partir des résultats de ladite étape de sommation 501 et, sommation 508 pour chaque maille de ladite matrice d'épandage des quantités apportées spatialement et/ou en densité en tous les points correspondants de ladite parcelle ; ils s'agit notamment de réaliser une mise à jour de chaque maille de la matrice d'épandage, par sommation en densité de matériau épandu, en tous les points affectés de ladite parcelle ;
■ étape g) détermination ou acquisition 509 en cours de déplacement d'un nouveau point de coordonnées GPS de ladite machine d'épandage sur ladite parcelle ;
■ Itération 510 des étapes a) à g) pour l'ensemble des points de coordonnées GPS situés au moins sur chacun des trajets d'épandage prédéterminés en mode plein champ sur ladite parcelle.

Préférentiellement, une fois le traitement d'épandage en mode plein champ de la parcelle réalisé, on itère lesdites étapes a) à g) pour l'ensemble des points de coordonnées GPS situés au moins un trajet de ladite machine d'épandage défini en bordure de ladite parcelle.
Cette dernière approche va à l'encontre des habitudes techniques de l'Homme du métier qui visent plutôt à effectuer un premier trajet en bordure de la parcelle à traiter, de façon à acquérir suffisamment d'informations à priori sur la parcelle, informations nécessaires et préalables à l'applications des techniques d'épandage selon l'art antérieur.

Préférentiellement, on met en oeuvre préalablement à l'épandage en mode bordure une étape préparatoire du calcul du temps d'ouverture d'au moins une des trappes d'alimentation dudit distributeur en tenant compte d'une fonction de détection de bord de ladite parcelle, de façon à imposer des décalages de positions des fins et débuts d'épandage, relative l'une à l'autre, et ainsi obtenir un bord « droit » après les passages plein champ, ledit bord droit préparant et favorisant ledit épandage en mode bordure.

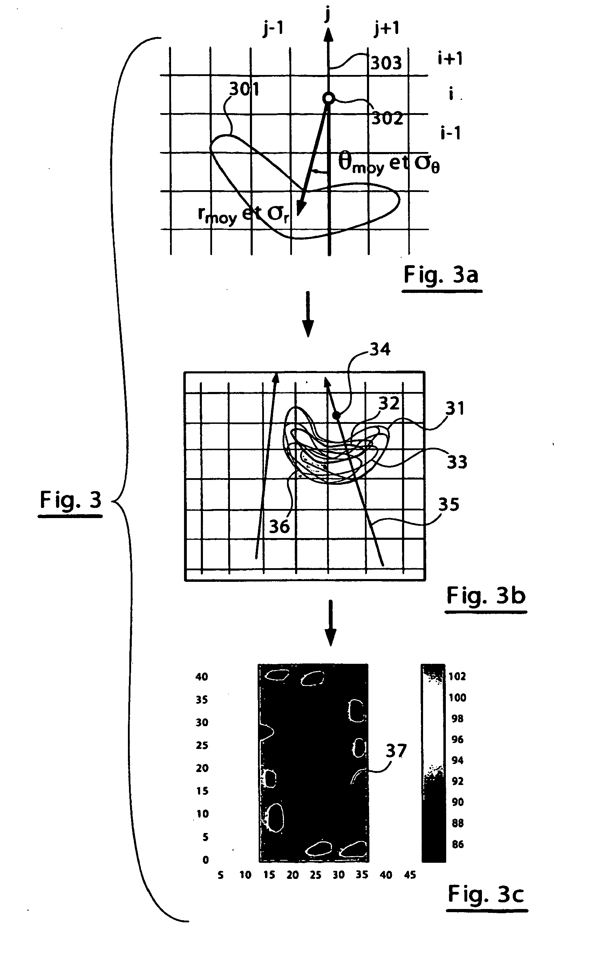

Dans un mode de réalisation avantageux du procédé selon l'invention, la nappe est modélisée par le produit d'au moins deux gaussiennes (comme illustré sur la figure 3.a).

Préférentiellement, les paramètres optimaux de la nappe comprennent au moins :
- le rayon moyen Rmoy(i,j) de ladite nappe 301, pour chaque position géographique de coordonnées (i,j) d'un disque du distributeur 302 équipant ladite machine d'épandage à un instant donné ;
- l'angle moyen θmoy(i,j) d'éjection d'une salve d'engrais en une position géographique de coordonnées (i,j) du distributeur 302, considéré relativement au vecteur de direction 303 du déplacement de ladite machine d'épandage ;
- l'écart type σ_{θ}moy(i,j) de l'angle d'éjection d'une salve d'engrais en une position géographique de coordonnées (i,j) du distributeur 302, considéré relativement au vecteur 303 de direction du déplacement de ladite machine d'épandage ;
- l'écart type σ_{R}moy(i,j) du rayon d'éjection de ladite nappe 301, pour chaque position géographique de coordonnées (i,j) d'un disque du distributeur 302 équipant ladite machine d'épandage à un instant donné;
- le débit massique Dm(i,j) de particules en chaque point de coordonnées (i,j) de ladite nappe.

Dans un mode de réalisation préféré de l'invention, pendant le déplacement de la machine d'épandage, le procédé calcule en temps réel la variation nécessaire de la valeur d'au moins un des paramètres précités de la nappe, correspondant à une nouvelle valeur de configuration d'au moins un organe du distributeur appartenant au groupe comprenant :
- les actionneurs de régulation du débit ;
- les actionneurs de positionnement de ladite goulotte d'alimentation en produit d'épandage situé en aplomb des disques rotatifs;
- les actionneurs de réglage de la vitesse de rotation des disques rotatifs ;
- les moyens d'alimentation d'au moins une pale d'un disque rotatif ;
- les moyens d'inclinaison d'un disque rotatif sur lui-même, suivant au moins deux axes ;
- les moyens d'inclinaison dudit distributeur suivant au moins les deux axes de réglage de l'aplomb ;
- les moyens de réglage en continu de la hauteur de ladite machine d'épandage.

Préférentiellement, le procédé selon l'invention transmet en continu des commandes de changement de valeur configuration à au moins un des organes du distributeur pendant le déplacement de la machine d'épandage, de façon à adapter la forme de la nappe et sa densité en particules à un instant donné, en fonction du cumul des consignes intermédiaires déjà atteint, relativement à la consigne prédéterminée.

Avantageusement, le procédé selon l'invention comprend une étape de correction en temps réel des consignes, lorsque la machine d'épandage quitte le trajet prédéterminé.

Il est donc de l'objet du procédé selon l'invention que de pouvoir générer une ou plusieurs alarmes si le sens de parcours du trajet dans la parcelle n'est pas celui pris en compte pour la détermination des consignes.

Préférentiellement, le procédé selon l'invention tient compte également d'au moins une caractéristiques appartiennent au groupe comprenant au moins :
- le type de distributeur de particules granulaires ;
- la largeur d'épandage ;
- la largeur de travail ;
- le débit d'épandage ;
- la nature desdites particules granulaires (engrais, sable, etc.) ;
- la masse volumique, la granulométrie, le coefficient de frottement sur la surface en rotation des disques d'épandage ;
- le trajet emprunté sur ladite parcelle par ladite machine d'épandage.

Avantageusement, le procédé selon l'invention ajuste la dose consigne et les doses consignes intermédiaires en fonction d'au moins une des données suivantes de forme, de topographie de la parcelle, d'obstacle(s) contenu(s) dans celle-ci, du type appartenant au groupe comprenant :
- les coins ;
- les pointes ;
- les zones de courbures ;
- les inclinaisons de pentes
- les bordures.

Préférentiellement, le procédé selon l'invention met en oeuvre une étape de mise à jour automatique de la carte prédéterminée dès lors que la machine d'épandage s'écarte au-delà d'un seuil de tolérance prédéterminé du trajet optimal prédéterminé.

Le procédé selon l'invention prend en compte de façon avantageuse des valeurs des paramètres de la nappe mesurés en temps réel par au moins un réseau de capteurs de mesure du type appartenant au groupe comprenant au moins :
- des capteurs d'imagerie rapide ;
- des capteurs vidéo ;
- des capteurs d'impact.
pour les mesurer en continu l'ensemble des valeurs de consigne prédéterminées et ainsi rétroagir dès lors que les valeurs mesurées ne sont plus en conformité avec les valeurs de consigne.

L'invention concerne également un programme d'ordinateur selon la revendication 21, comprenant des instructions de code de programme pour l'exécution des étapes du procédé de contrôle de l'épandage précité.

Un tel programme d'ordinateur peut être indifféremment exécuté sur un ordinateur localisé à la ferme de l'exploitant et/ou exécuté par un calculateur ou un ordinateur embarqué à bord de la machine d'épandage.

Dans un mode de réalisation avantageux de l'invention, il est possible d'envisagé que les fichiers de travail préparés de façon préliminaire par l'exploitant sur son ordinateur localisé à la ferme puissent être transmis par liaison sans fil type Wi-Fi ou GSM, directement à l'ordinateur embarqué à bord de la machine d'épandage, de façon à simplifier les manipulations de fichiers à partir de CDRom ou de disquettes.

L'invention concerne enfin une machine agricole d'épandage, selon la revendication 22.

Préférentiellement, les moyens d'optimisation prennent en compte au moins une information représentative de la forme de la nappe d'épandage et/ou d'au moins une différence de densité particules en différents points de la nappe.

De façon avantageuse, ne telle machine d'épandage selon l'invention comprend :
- des moyens d'obtention de la carte prédéterminée, sous la forme d'une série de doses consignes affectées à chaque maille d'une représentation de la parcelle découpée en mailles de dimensions prédéterminées;
- des moyens d'obtention d'au moins une représentation spatiale et de densité de la nappe d'épandage associée au type du distributeur utilisé ;
- des moyens de modélisation d'au moins trajet optimal devant être effectué par la machine d'épandage dans la parcelle, sous la forme de points correspondants à des positions géographiques successives ;
- des moyens de détermination pour chacune des positions géographiques successives, des paramètres optimaux de forme et de densité de la nappe permettant de définir à un instant donné au moins une dose consigne intermédiaire affectée à au moins une partie d'une maille couverte par ladite nappe.

Une telle configuration de mise en oeuvre de l'ensemble de ces moyens permet avantageusement qu'à l'issue du traitement de l'ensemble de la parcelle, les cumuls des consignes intermédiaires en tous points des mailles soient sensiblement égaux à la valeur des consignes des mailles respectivement.

Préférentiellement, ladite machine embarque des moyens de modélisation de la nappe sous la forme d'un produit d'au moins deux gaussiennes.

Préférentiellement, les paramètres optimaux de la nappe comprennent au moins :
- le rayon moyen Rmoy(i,j) de ladite nappe 301, pour chaque position géographique de coordonnées (i,j) d'un disque du distributeur 302 équipant ladite machine d'épandage à un instant donné ;
- l'angle moyen θmoy(i,j) d'éjection d'une salve d'engrais en une position géographique de coordonnées (i,j) du distributeur 302, considéré relativement au vecteur de direction 303 du déplacement de ladite machine d'épandage ;
- l'écart type σ_{θ}moy(i,j) de l'angle d'éjection d'une salve d'engrais en une position géographique de coordonnées (i,j) du distributeur 302, considéré relativement au vecteur 303 de direction du déplacement de ladite machine d'épandage ;
- l'écart type σ_{R}moy(i,j) du rayon d'éjection de ladite nappe 301, pour chaque position géographique de coordonnées (i,j) d'un disque du distributeur 302 équipant ladite machine d'épandage à un instant donné;
- le débit massique Dm(i,j) de particules en chaque point de coordonnées (i,j) de ladite nappe.

Ces différents paramètres sont calculés et/ou pris en compte à intervalles de temps successifs (par exemple, toutes les secondes) du déplacement de la machine d'épandage, le dosage consigne correspondant étant alors délivré à chaque intervalle de temps, par la machine d'épandage travaillant sur la parcelle.

De façon avantageuse, une telle machine selon l'invention qu'elle comprend, dans un mode de réalisation de l'invention, des moyens de calcul en temps réel, lors de son déplacement, de la variation nécessaire de la valeur d'au moins un des paramètres de la nappe correspondant une nouvelle valeur de configuration. Elle comprend également des moyens de commande utilisant la nouvelle valeur de configuration d'au moins un organe du distributeur appartenant au groupe comprenant :
- les actionneurs de régulation du débit ;
- les actionneurs de positionnement de ladite goulotte d'alimentation en produit d'épandage situé en aplomb des disques rotatifs;
- les actionneurs de réglage de la vitesse de rotation des disques rotatifs.
- Les moyens d'alimentation d'au moins une pale d'un disque rotatif ;
- les moyens d'inclinaison d'un disque rotatif sur lui-même, suivant au moins deux axes ;
- les moyens d'inclinaison dudit distributeur suivant au moins les deux axes de réglage de l'aplomb ;
- les moyens de réglage en continu de la hauteur de ladite machine d'épandage.

Dans un mode de réalisation préféré de l'invention, la machine d'épandage comprend des moyens de transmission en continu des commande de changement de la valeur configuration à au moins un des organe du distributeur pendant le déplacement de la machine, de façon à adapter en temps réel la forme de la nappe et sa densité en particules à un instant donné, en fonction du cumul des consignes intermédiaires déjà atteint, relativement à la consigne prédéterminée.

Dans un mode de réalisation avantageux de l'invention, la machine d'épandage comprend en outre des moyens de correction en temps réel des consignes intermédiaires, lorsque qu'elle quitte un trajet prédéterminé.
Dans ce sens, elle dispose avantageusement de moyens de génération d'au moins une alarme si un sens de parcours du trajet dans la parcelle n'est pas celui pris en compte pour la détermination des consignes intermédiaires.

Une telle machine comprend en outre et de façon avantageuse, des moyens d'ajustement de la dose consigne globale et/ou des doses consignes intermédiaires tenant compte d'au moins une des données suivantes de forme, de topographie de ladite parcelle, d'obstacle(s) contenu(s) dans celle-ci, du type appartenant au groupe comprenant :
- les coins ;
- les pointes ;
- les zones de courbures ;
- les inclinaisons de pentes
- les bordures ;
et des moyens de détection du passage de la machine d'un mode pleine largeur de travail en un mode bordure, ces moyens de détection pouvant être du type capteur laser, dès lors que la distance entre ladite machine et au moins un obstacle devient inférieure à une valeur de seuil prédéterminée.

Dans un mode de réalisation préféré de la machine d'épandage selon l'invention, celle-ci comprend des moyens de mise à jour automatique de la carte prédéterminée dès lors qu'elle s'écarte au-delà d'un seuil de tolérance prédéterminé du trajet optimal prédéterminé.

Enfin, une telle machine d'épandage comprend de façon préférentielle, des moyens de mesures en temps réel des valeurs des paramètres de la nappe se présentant sous la forme d'au moins un réseau de capteurs de mesure embarqués, du type appartenant au groupe comprenant au moins :
- des capteurs d'imagerie rapide ;
- des capteurs vidéo ;
- des capteurs d'impact.

L'invention repose donc sur une approche complètement nouvelle et inventive de l'optimisation de la gestion de la dose consigne à considérer en tenant compte aussi bien des informations techniques et de position géographique propres à la machine d'épandage et à son distributeur correspondant, que des informations représentatives de la forme réelle et de la densité en produits d'épandage (engrais, semis, etc.) de la nappe réellement disponible sur le sol de la parcelle à traiter, en sortie dudit distributeur, la nappe ayant été préalablement modélisée et mémorisée.

En effet, il est important de souligner que dans les solutions connues, tous les travaux préparatoires de détermination des doses consignes optimales et des trajets de la machine d'épandage sont effectués sous l'hypothèse erronée que la nappe d'épandage correspondant à une salve de particules granulaires en sortie du distributeur est sensiblement rectangulaire et uniforme. Or, les inventeurs ont constaté qu'une telle nappe de recouvrement du sol en particules en sortie de distributeur a nullement une forme rectangulaire, mais plutôt une forme pouvant s'apparenter à un croissant, laquelle peut également être ajustée d'une manière prédéfinie et/ou en temps réel, aussi bien en forme, qu'en densité de produit à épandre, lors du déplacement de la machine d'épandage.

En d'autres termes, dans les solutions de l'art antérieur précitées, il est introduit un biais important dans la phase de calcul et d'optimisation de la dose consigne à considérer, cette optimisation ne prenant pas en compte la réalité de la nappe d'épandage relative au type de distributeur utilisé.
Ce biais est en outre accentué par le fait que pendant la phase d'épandage sur le terrain, l'exploitant ou la machine d'épandage elle-même tente de minimiser les erreurs de sur ou de sous dosage en jouant uniquement sur les paramètres de débit du distributeur, en fonction de la réalité du jalonnage du terrain.

En conséquence, la dose consigne calculée et prise en compte par la machine d'épandage dans ces solutions de l'art antérieur ne sera jamais une dose consigne optimale au sens des besoins réellement estimés pour le traitement de la parcelle ou des soins devant être apportés à une culture d'une variété de plante donnée, ce qui va précisément à l'encontre de la définition et des objectifs fixés dans la cadre d'une agriculture de précision.

L'invention, en revanche, permet de fortement améliorer l'exactitude des doses consignes à appliquer puisqu'elle s'appuie sur une prise en compte des paramètres réels de forme et de densité de la nappe d'épandage obtenue pour un type de distributeur. Il s'agit en effet dans le cadre de la technique proposée par l'invention de rechercher préalablement et/ou en temps réels les différents paramètres de la nappe d'épandage qui minimisent les défaut d'épandage, à partir de la modélisation préalable ou du calcul en temps réel de la répartition réelle en produit d'épandage sur le sol de la parcelle à traiter.

L'invention s'inscrit donc parfaitement dans un contexte d'agriculture de précision dont l'un au moins des objectifs associés vise à coller au plus près des besoins réels de la parcelle et/ou de la culture à traiter, tout en tenant compte également des contraintes environnementales avoisinantes.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, faite en référence aux dessins annexés parmi lesquels :
- la figure 1 est une vue schématique de côté d'une machine d'épandage de semis ou d'engrais ;
- la figure 2 illustre la contrainte de la réalité de l'épandage centrifuge impliquant une dose consigne obtenue par succession ou superposition de salves de produit d'épandage ;
- la figure 3.a illustre la nappe d'un distributeur sous la forme d'un produit de deux gaussiennes paramétrables;
- la figure 3.b donne un exemple de recherche des imbrications optimale en forme et en densité des nappes à déposer sur la parcelle ;
- la figure 3.c présente une carte de préconisation et d'ajustement des doses consignes en fonction des imbrications obtenues de la figure 3.b.

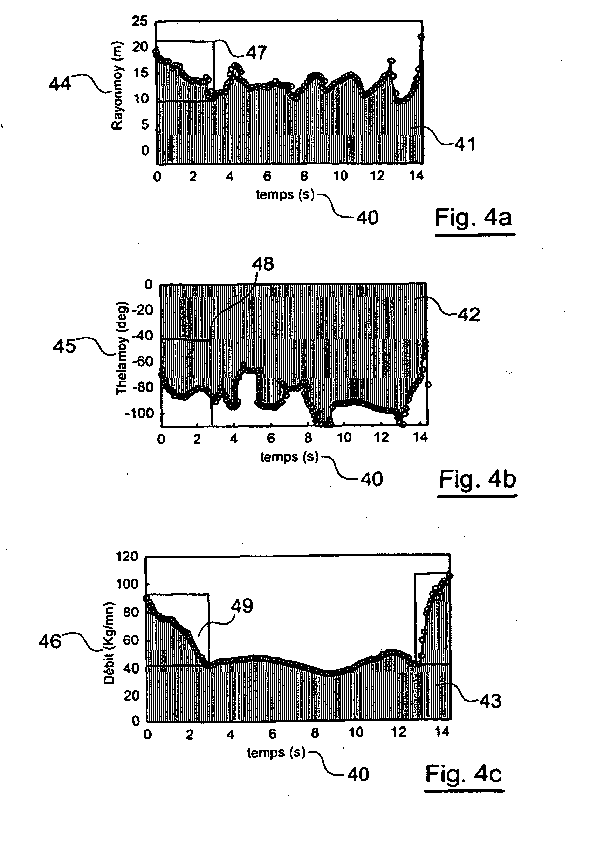

- les figures 4.a à 4.b donnent des exemple des variations des paramètres de nappes d'épandage en fonction du temps.
- La figure 5 illustre le principe général de réalisation et d'application du transect dans le cadre du procédé selon l'invention.

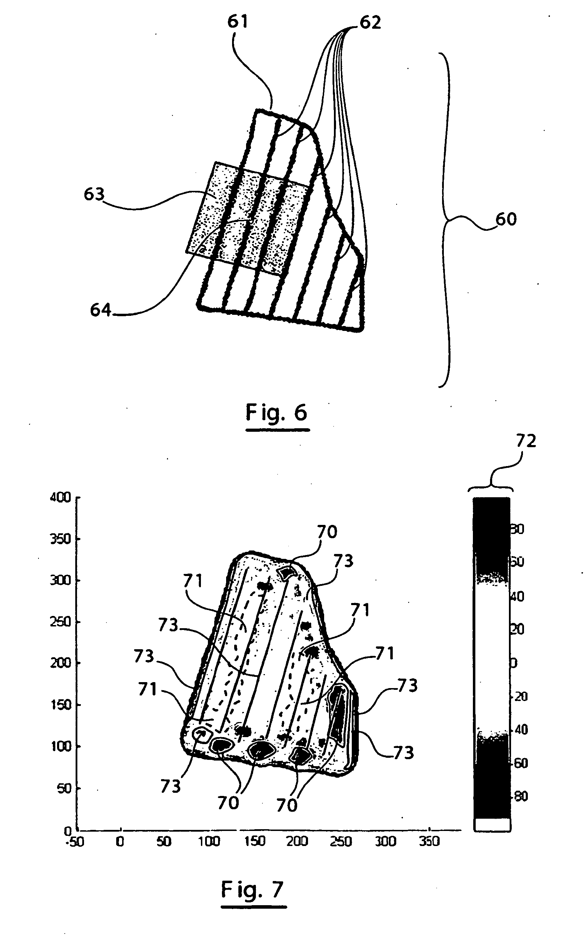

- La figure 6 donne une représentation de la « matrice d'épandage » en un point de la « matrice champ ».
- La figure 7 offre un exemple de représentation d'un épandage sans optimisation d'une parcelle à traiter, avec un réglage de largeur de travail constant fixé à 24 mètres.

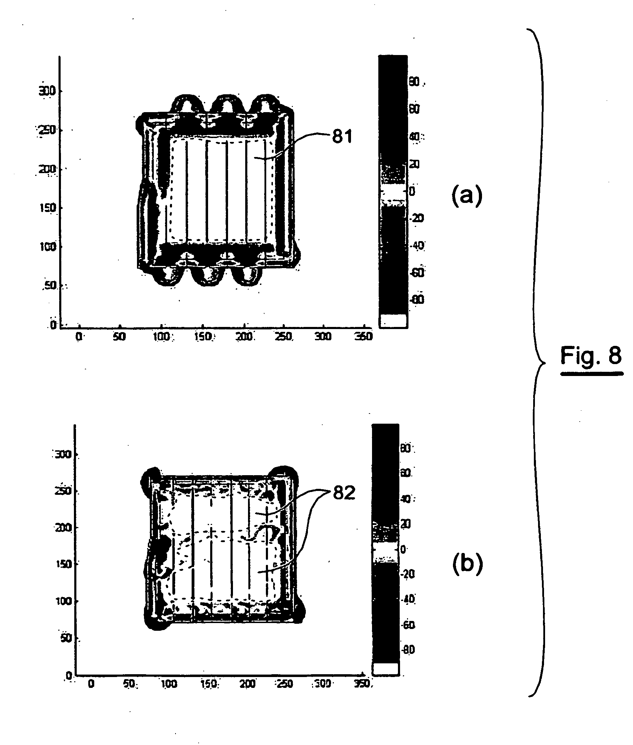

- Les figures 8.a et 8.b illustrent respectivement pour une même parcelle modélisée numériquement en court d'épandage, une carte de dosages locaux obtenus sans modulation des paramètres de réglage de la machine d'épandage et, une carte de dosage locaux obtenus avec optimisation en mode plein champ.

### 6. Description d'un mode de réalisation préféré de l'invention

La présente invention concerne un procédé d'optimisation du calcul et de la gestion de la dose consigne que le distributeur, équipé par exemple de disques rotatifs d'épandage de particules (engrais, semis, etc.) granulaires (ou sous une autre forme, telle que liquide ou poudre) doit réellement délivrer pendant l'épandage, en cohérence avec chaque dose consigne préconisée pour chaque position géographique d'une parcelle.

Selon un procédé original et inventif, le principe général de l'invention consiste à optimiser tous les paramètres de l'épandage centrifuge d'un distributeur et à les ajuster en temps réel pendant le déplacement de la machine d'épandage sur la parcelle à traiter, en tenant compte également des contraintes de variation ou de jalonnage du terrain, de façon à éventuellement ajuster en temps réel les consignes de dosage initialement prévues dans la carte des consignes, sous la forme de consignes intermédiaires.

Un avantage de la technique selon l'invention est qu'elle permet en outre d'anticiper et de corriger la valeur de la ou des doses consignes délivrées en chaque points de la parcelle, en tenant compte également du fait que, tel qu'on pu le constater les inventeurs et comme illustré sur la figure 2, la dose consigne optimale en tous points n'est pas nécessairement apportée par le dépôt sur le sol d'une seule salve d'engrais ou de produit d'épandage, mais par une succession 20 ou superposition 21 de salves d'engrais intervenues à des instants différents et suivant des directions 22, 23 différentes en fonction des trajets 23-27 suivis par la machine d'épandage.

Ainsi, dans un mode de réalisation préféré du procédé de contrôle de l'épandage d'une machine agricole équipée d'au moins un distributeur, la quantité de produit d'épandage à délivrer à un instant donné est calculée sous la forme d'une consigne optimale affectée en chaque maille d'une carte de consignes optimisée de la parcelle à traiter, laquelle prend en compte au moins une information représentative de la forme et de la densité en produit d'épandage de la nappe obtenue en sortie du distributeur, ce qui permet avantageusement d'imbriquer au mieux les nappes successives et ainsi permettre un traitement d'épandage optimal pour l'ensemble de la parcelle.

Le procédé selon l'invention s'appuie dans un premier temps sur l'exécution des étapes préparatoires suivantes :
- étape 1 : obtention d'une carte prédéterminée, sous la forme d'une série de doses consignes affectées à chaque maille d'une représentation de la parcelle découpée en mailles de dimensions prédéterminées;
- étape 2 : obtention d'au moins une représentation spatiale et de densité de la nappe d'épandage associée au type du distributeur utilisé ;
- étape 3 : modélisation d'au moins trajet optimal devant être effectué par la machine d'épandage dans ladite parcelle, sous la forme de points correspondants à des positions géographiques successives ;
- étape 4 : détermination pour chacune des positions géographiques successives, des paramètres optimaux de forme et de densité de la nappe (ou des nappes associées à chacun des disques rotatifs du distributeur) permettant de défmir à un instant donné au moins une dose consigne intermédiaire affectée à au moins une partie d'une maille couverte par la nappe.

Il s'agit au travers l'exécution de ces étapes préparatoires de préparer les données qui permettront qu'à l'issue du traitement de l'ensemble de la parcelle les cumuls des consignes intermédiaires en tout point des mailles soit sensiblement égaux à la valeur des consignes des mailles respectivement.

La quantité de particules délivrée à un instant donné est donc maintenant fonction d'une consigne tenant compte aussi bien de la position géographique de la machine d'épandage sur la parcelle à un instant donné et d'une carte prédéterminée des besoins en particules sur différentes portions, ou mailles, de la parcelle à traiter, que d'une information au moins, représentative de la forme et/ou de la densité de la nappe d'épandage au sol en sortie du distributeur de particules.

On constate en effet que la forme réelle de cette nappe n'est pas rectangulaire, et qu'il est important de prendre en compte une telle contrainte.

Il s'agit en effet dans le cadre de cette technique de rechercher préalablement et/ou en temps réels les différents paramètres de la nappe d'épandage qui minimisent les défaut d'épandage, à partir de la modélisation préalable ou du calcul en temps réel de la répartition réelle en produit d'épandage sur le sol de la parcelle à traiter.

Dans ce sens, les travaux des inventeurs ont en effet permis de montrer que la répartition réelle au sol de la nappe d'épandage peut être modélisé comme un produit de deux gaussiennes 301, 302 (comme illustré sur la figure 3.a), correspondant respectivement aux formes des nappes droite et gauche délivrées à chaque instant par chacun des deux disques rotatifs équipant le distributeur d'engrais ou de semi (granulaire) ou de tout autre produit pouvant être épandu (liquide ou poudre par exemple) sur le sol.

Sur la base d'une telle modélisation préliminaire de la répartition réelle au sol durant l'épandage, ou du calcul en temps réel pendant le déplacement de la machine d'épandage, de cette répartition, une telle technique d'optimisation de la gestion de l'épandage sur une parcelle à traiter permet, d'une façon nouvelle et inventive relativement aux techniques connues de l'art antérieur, de gérer les éventuelles erreurs de dosage localisées, d'une par la modification des imbrications des nappes délivrées à des instants différents sur un ou plusieurs trajet de la machine d'épandage, les unes par rapport aux autres et ; d'autre part, par la modification ou l'ajustement de la densité ou de la quantité en produit d'épandage apportée par chacune de ces différentes nappes imbriquées.

Ceci est en effet possible en recherchant pour chaque position géographique d'un trajet de la machine d'épandage les valeurs optimales des paramètres suivants de chaque gaussienne modélisant la nappe d'épandage et qui permettent de minimiser les défauts d'épandage à un instant donné et en une position géographique donnée de la machine d'épandage :
- le rayon moyen Rmoy(i,j) de ladite nappe 301, pour chaque position géographique de coordonnées (i,j) d'un disque du distributeur 302 équipant ladite machine d'épandage à un instant donné ;
- l'angle moyen θmoy(i,j) d'éjection d'une salve d'engrais en une position géographique de coordonnées (i,j) du distributeur 302, considéré relativement au vecteur de direction 303 du déplacement de ladite machine d'épandage ;
- l'écart type σ_{θ}moy(i,j) de l'angle d'éjection d'une salve d'engrais en une position géographique de coordonnées (i,j) du distributeur 302, considéré relativement au vecteur 303 de direction du déplacement de ladite machine d'épandage ;
- l'écart type σ_{R}moy(i,j) du rayon d'éjection de ladite nappe 301, pour chaque position géographique de coordonnées (i,j) d'un disque du distributeur 302 équipant ladite machine d'épandage à un instant donné;
le débit massique Dm(i,j) de particules en chaque point de coordonnées (i,j) de ladite nappe.

Comme illustré sur la figure 3.b, la technique d'optimisation selon l'invention consiste donc à rechercher la meilleure façon d'imbriquer les différentes nappes 31, 32, 33 de produit d'épandage successivement déposées sur la parcelle à traiter pour chaque position géographique 34 d'un trajet 35 de la machine d'épandage, ainsi que la densité de produit d'épandage à fournir pour chacune de ces différentes nappes, de façon que le dosage et la répartition en produit d'épandage réellement délivré sur la parcelle soit le plus proche possible de la dose consigne optimale affectée à chaque maille 36 d'une carte de consigne optimisée de la parcelle.

En d'autres termes et de façon résumée, il selon la technique de l'invention de déterminer les paramètres optimaux Rmoy(i,j), θmoy(i,j) et Dm(i,j) de chacune des gaussiennes représentant les nappes droite et gauche des disques rotatifs du distributeur, pour chaque géoposition (i,j) sur la parcelle, qui permettent d'obtenir une répartition aussi régulière que possible en engrais ou semis à l'intérieur de la parcelle. Une telle répartition optimale peut être ainsi représenté sous la forme d'une carte de doses à distribuer après optimisation des paramètres Rmoy(i,j), θmoy(i,j), σ_{θ}moy(i,j), σ_{R}moy(i,j), Dm(i,j) qui soient facilement interprétables informatiquement, comme illustré sur la figure 3.c.

Dans un mode de réalisation préféré de l'invention, les valeurs moyennes des paramètres Rmoy(i,j), θmoy(i,j), σ_{θ}moy(i,j), σ_{R}moy(i,j) et Dm(i,j) régissant l'épandage centrifuge dépendent essentiellement des caractéristiques techniques du distributeur utilisés.

Pour les distributeurs d'engrais ou de semis fabriqués par le Déposant, les valeurs suivantes de ces paramètres peuvent être considérées à titre de simple exemple illustratif et non limitatif de l'invention :
- Dm(i,j) : peut varier de 0 à + de 1000kg/ha avec des valeurs usuelles plutôt situées aux alentours de à 350kg/ha ;
- θmoy(i,j): peut varier de -30 à +50° avec des valeurs usuelles plutôt situées aux alentours de 20° ;
- Rmoy(i,j) : peut varier de 6 à 17m avec des valeurs usuelles plutôt situées aux alentours de 13.5m.

Les valeurs optimales de ces paramètres, une fois déterminées et mémorisées dans un fichier de format prédéterminé pour une position géographique donnée de la machine d'épandage, seront lues en temps réel par un calculateur embarqué à bord de la machine d'épandage, ce dernier se chargeant de transmettre les ordres de commandes au distributeur permettant d'obtenir ces valeurs optimales de chaque nappe droite et gauche d'épandage en sortie du distributeur.

Ces ordres de commande sont par exemple transmis aux actionneurs de régulation du débit du produit d'épandage et/ou aux actionneurs de positionnement de la goulotte d'alimentation en produit d'épandage situé en aplomb des disques rotatifs, et/ou encore au actionneurs respectifs de réglage de la vitesse de rotation ou de l'inclinaison des disques rotatifs du distributeur.

Les figures 4.a, 4.b et 4.c donnent un exemple de courbes 41, 42, 43 d'histogramme présentant respectivement les variations 47, 48, 49 en continu et en fonction du temps 40, des paramètres optimaux Rmoy(i,j) 44, θmoy(i,j) 45 et Dm(i,j) 46 de chacune des gaussiennes 301, 302 représentant les nappes droite et gauche des disques rotatifs du distributeur, pour le traitement d'épandage d'une parcelle donnée.

Ces variations dans le temps des valeurs des paramètres optimaux Rmoy(i,j) 44, θmoy(i,j) 45 et Dm(i,j) 46, sont interprétées en temps réel par un ordinateur embarqué à bord de la machine d'épandage qui commande également en temps réel les ajustements des actionneurs du distributeur.

Dans une variante avantageuse de l'invention, il convient de favoriser dans certains contextes d'utilisation pour lesquels la machine d'épandage dispose à son bord de ressources de calcul (ordinateur, assistant personnel embarquée, etc.) limitée en puissance et/ou en mémoire une mise en oeuvre plus pragmatique.

Une telle variante du procédé selon l'invention, dite «méthode intermédiaire » d'optimisation de l'épandage, par distinction avec la variante principale du procédé selon l'invention, dite « méthode totale » d'optimisation de l'épandage, s'appuie sur une exploitation de courbes transversales de répartition, comme illustré sur la figure 5.

Les prises de décision concernant la valeurs des doses consignes intermédiaires à délivrer en un point prédéterminé de la parcelle à traiter, complémentairement au cumul des doses consignes intermédiaires déjà épandues lors de précédents passages de la machine d'épandage sur la parcelle, sont ainsi réalisées par l'ordinateur embarqué à bord de la machine d'épandage, suivant une relation de proportionnalité entre les paramètres dose, débit, largeur de travail et vitesse, avec prise en compte du paramètre largeur de travail, à la fois comme paramètre de réglage de la forme de la distribution d'engrais (forme spatiale et/ou en densité de la nappe d'épandage en sortie du distributeur), mais aussi pour la détermination du débit d'alimentation du distributeur (par exemple d'engrais).

La prise de décision des paramètres d'épandage à ajuster et leurs valeurs respectives d'ajustement en continu lors de l'épandage étant réalisée, la distribution spatiale réelle d'épandage est considérée dans l'historique d'apport en matériaux d'épandage à la parcelle.
La méthode est donc mixte entre un raisonnement uniquement basé sur les courbes transversales, et un raisonnement uniquement basé sur la réalité spatiale de l'épandage.

Dans une parcelle, les passages plein champ sont espacés, plus ou moins, de la même largeur.

L'idée dans la variante « intermédiaire d'optimisation » du procédé d'épandage selon l'invention, consiste donc à fixer les paramètres du distributeur, de manière à avoir un bon recouvrement pour cette largeur de passage, puis d'ajuster la largeur de travail de l'épandeur en fonction de la géométrie réellement rencontrée dans la parcelle.

Le principe général revient ainsi à fertiliser d'abord les zones plein champ, qui posent le moins de problèmes a priori, puis en fonction de ce qui a déjà été épandu, d'ajuster les doses dans les zones à problèmes.

La connaissance de la parcelle réside ainsi également dans le relevé de points GPS correspondants aux trajectoires suivies par le distributeur. A partir de ces coordonnées, une « matrice champ » Mc est créée par connaissance des bordures de la parcelle (par exemple à partir des données contenues dans un fichier bordures), qui stocke les doses épandues dans la parcelle (le poids de cette matrice n'augmente pas beaucoup tout au long de l'épandage, car seul le résultat des sommes successives de doses de fertilisants apportées lors des différents passages est mis en mémoire (recouvrements dus aux passages successifs de la machine, mais aussi aux recouvrements des nappes d'épandage entre elles).

La maille choisie peut être, à titre illustratif et non limitatif, une maille carrée de 1m, c'est-à-dire que chaque dose de la matrice est à rapporter à un carré de 1m×1m dans le champ. Il est bien entendu possible d'envisager de façon non limitative tout autre choix de dimensionnement et/ou de forme de la maille.

Une fois la « matrice nappe » connue, il s'agit de l'appliquer dans la parcelle aux points définis (nappe à poste fixe).

Comme illustré sur la figure 6, les traits (61, 62) clairs représentent les points de passage de la machine d'épandage dans la parcelle à traiter, le fond plus foncé représente la « matrice champ » 60, notée « M_{c} », et le rectangle de couleur intermédiaire représente la « matrice d'épandage » 63, notée « Mep », centré autour d'un point 64 (croix noire) de coordonnées GPS d'un 62 de la machine d'épandage sur la parcelle à traiter.

Le résultat de l'application de cette variante « pragmatique » du procédé selon l'invention, à la totalité de la parcelle, sans modification des paramètres de réglage est donné sur la figure 7, laquelle permet de matérialiser zones de la parcelle à traiter présentant des défauts (sous-dosages/ sur-dosages/...) d'épandage, des zones ayant pu bénéficier dune dose consigne optimale.

Dans l'exemple de la figure 7, une représentation de l'épandage de toute la parcelle avec un réglage constant de 24 mètre est donnée à titre de simple exemple illustratif et non limitatif Il est bien entendu possible d'envisager toute autre largeur de travail prédéterminée en sorite de distributeur de la machine d'épandage.

L'échelle utilisée est en pourcentage de la dose consigne, l'objectif étant donc atteint lorsque l'on obtient pour certaines zones (71) de la parcelle une valeur proche de « 0 », un surdosage se matérialisant dans d'autres zones (70) lorsque l'on constate des valeurs positives (entre 25 et jusqu'à 80 sur l'échelle 72), et un sous-dosage sur d'autres zones (73) se matérialisant lorsque l'on constate des valeurs négatives (entre 25 et jusqu'à 80 sur l'échelle 72).

La simulation des doses épandues sur une parcelle complète étant réalisée, il faut alors minimiser les zones de sur et sous-dosage qui peuvent apparaître. L'idée est donc de moduler ce qui doit être épandu en fonction de ce qui l'a déjà été.

Pour ce qui concerne le choix de la largeur de travail durant l'épandage, dans un premier temps, seule la nappe de répartition correcte de largeur prédéterminée est utilisée pour initialiser le premier passage
L'aspect optimisation n'intervient donc qu'au début du deuxième passage.

En effet, lorsque l'on effectue le tout premier passage plein champ, rien n'a encore été épandu, mais les passages sont réputés être espacés d'une largeur prédéterminée, par exemple de 24 mètres. Le distributeur de la machine d'épandage est donc réglé initialement de manière à obtenir le meilleur recouvrement possible avec cette largeur de travail.

Pour les passages suivants, l'optimisation peut être partiellement réalisée puisque sur l'un des côtés, un apport a déjà été réalisé. Du coté où rien n'a encore été épandu, les réglages pour un épandage à 24 m seront appliqués à la machine. De l'autre coté il faut tenir compte de ce qui a déjà été distribué dans le champ (même si le champ est jalonné suivant des largeurs prédéterminées, les passages ne sont pas forcément exactement espacés de cette même largeur et il faut donc ajuster les paramètres).

Au moyen du procédé d'optimisation de l'épandage selon l'invention, on déduit donc les paramètres d'épandage à appliquer lors d'un passage sur un trajet donné, de ce qui a déjà été épandu au voisinage de ce trajet lors d'un précédent passage sur ce dernier.

Cette amélioration est visible, couplée avec celle générée par l'optimisation des débuts et fins de parcelle, sur les figures 8.(a) et 8.(b).

Pour ce qui concerne maintenant la gestion des zones de la parcelle à traiter où se croisent des épandages plein champ et bordure, un autre élément à prendre en compte est l'endroit où l'on fertilise.

En effet, les zones où il y a des problèmes de dosages correspondent principalement aux zones de début et fin d'épandage en plein champ. Il est alors possible d'améliorer cela en choisissant bien les points d'ouverture et de fermeture des trappes.

Le problème réside dans le fait que le distributeur épand l'engrais à plusieurs mètres derrière lui.

Donc si on arrête d'épandre à la fm d'un passage, et que l'on reprend, dans le passage suivant, au même niveau, les zones épandues sont complètement décalées.

Pour éviter cela, le procédé d'optimisation de l'épandage selon l'invention l'idée est d'imposer des décalages de positions des fins et débuts d'épandage, relative l'une à l'autre, pour obtenir un bord « droit » après les passages plein champ (avant le détourage).

Tout d'abord, une fonction de « détection du bord » a été créée. En fonction d'un seuil de début et d'un seuil de fm d'épandage relatif à la bordure de parcelle (seule données parcellaire préalable nécessaire avec cette méthode), il est définit en chaque point GPS si le distributeur doit épandre ou non.

Ensuite, pour optimiser les recouvrements qui devront être réalisés lors du passage en mode bordure, et donc optimiser le résultat d'épandage dans cette zone, les seuils d'ouverture et de fermeture des trappes sont définis de façon relative l'un par rapport à l'autre.

Pour exemple de résultats obtenus au moyen du procédé d'optimisation d'épandage selon l'invention, on présente la carte de la figure 8.(a) obtenue sans aucune modulation des paramètres d'obtention de la largeur de travail ni du débit, ainsi que la carte de la figure 8.(b) de la même figure a été obtenue avec optimisation plein champ et bordure.

Les résultats montrent clairement une diminution des valeurs absolues de sur et sous-dosage (passage par exemple de +90% de la dose consigne à +25 à 30% suite à l'optimisation), la majorité des zones traitées étant devenues des zones (81, 82) claires (de valeur voisine de « à » en dosage apporté lors de l'épandage.

### 7. Résumé de l'invention et de ses principaux avantages

L'invention repose donc sur une approche nouvelle et inventive de l'optimisation et de l'ajustement en temps réel des paramètres de forme et de densité des différentes nappes de produits d'épandage successivement déposées pendant les trajets de la machine d'épandage sur la parcelle à traiter, à des instants différents. Une telle optimisation de la nappe (ou des nappes de chacun des disques rotatifs) est rendue possible en pilotant en temps réel et sur la base des informations de formes et de densités de la nappes d'épandage à un instant donné, les différents actionneurs (régulation du débit, positionnement de la goulotte d'alimentation en produit d'épandage situé en aplomb des disques rotatifs, vitesse de rotation ou inclinaison des disques rotatifs, par exemple) du distributeur.

Un avantage essentiel de l'invention réside donc dans le fait qu'il est désormais possible de prévoir à l'avance ou de calculer en temps réel durant l'épandage, tous les paramètres intervenant dans un épandage centrifuge.

Les deux variantes du procédé selon l'invention, la première dite « méthode totale » et la deuxième, dite « méthode intermédiaire » d'optimisation, sont à la fois nouvelle et inventive respectivement, au vu des approches connues de l'art antérieur.

La variante principale (méthode « totale » d'optimisation) du procédé d'optimisation de l'épandage selon l'invention repose en effet sur une optimisation des apports à l'échelle spatiale de la parcelle qui est basée sur les caractéristiques, elles-mêmes spatiales, de la répartition d'engrais qu'apporte le distributeur. Le traditionnel paramètre de réglage primordial des machine qu'est la largeur de travail est donc quasiment « supprimé » du raisonnement, en faveur d'un « placement optimisé » des densités d'engrais distribuées par les disques d'épandages à chacune des positions successives de l'appareil.

La deuxième variante du procédé selon l'invention, plus pragamatique en ce qu'elle favorise l'utilisation de ressources en calcul moins importantes que dans le cadre de la « méthode totale » est donc moins « radicale » dans son approche puisque, même si elle tient compte de la réalité spatiale de la répartition d'engrais qu'apportent les disques, le raisonnement utilisé pour la prise de décision est basé sur les notions traditionnelles de largeur de travail optimum (fonction des courbes transversales de répartition), espacements réels des différents passages du distributeur dans la parcelle.

Cette deuxième variante du procédé d'optimisation de l'épandage sur une parcelle à traiter va même à l'encontre des préjugés techniques de l'Homme du métier, en se quelle préconise dans une première phase de l'épandage une première passe d'épandage standard (en largeur et en densité de la nappe d'épandage appliquée) de la parcelle à traiter, en mode plein champ.
Lors de cette première passe d'épandage, en chaque maille de la matrice d'épandage, on épand une quantité de matière ou dose consigne intermédiaire correspondant à un épandage standard selon les habitudes de l'Homme de l'art.
C'est ensuite lors d'au moins une deuxième passe d'épandage suivant lesdits trajets prédéterminé que l'on ajuste les doses consignes suivantes à délivrer complémentairement en chaque maille de la matrice d'épandage, de façon qu'à la fin de l'épandage de la parcelle, le cumul en superposition des différentes doses consignes intermédiaires corresponde à la dose consigne préconisée en chaque point de la parcelle à traiter.
C'est donc uniquement à la fin du traitement de la parcelle en mode plein champ, puis en mode d'ajustement des doses consignes intermédiaires complémentaires, que l'on réitère la démarche sur la bordure de la parcelle à traiter.
Une telle approche selon l'invention permet avantageusement de n'avoir à connaître que la connaissance du fichier de bordure de la parcelle à traiter, sans plus de besoins relatifs à ceux habituellement utilisés dans le domaine de l'agriculture de précision.

Une telle approche nouvelle et inventive se trouve en parfaite adéquation avec les contraintes propres à l'agriculture de précision, lesquelles visent à apporter une ou plusieurs justes doses d'un ou plusieurs produits nécessaire à la maturité d'une plante donnée, tout en limitant les risques de sur et/ou de sous dosages et, tout en réduisant également les risques de pollution de la parcelle elle-même ou de son environnement plus ou moins proche.

En effet, le procédé selon l'invention autorise désormais, et contrairement aux techniques connues de l'art antérieur, une optimisation spatiale de l'épandage directement réalisable à l'échelle intraparcellaire.

Un tel procédé selon l'invention, dans son mode de réalisation principale, amène une dimension scientifique de l'épandage, ce qui amène à une rupture technologique totale en ce qui concerne la gestion des épandages telle qu'on pouvait la connaître, basée sur une relation de proportionnalité entre débit, largeur, vitesse et dose, telle que décrite dans les techniques connues de l'art antérieur.

Le procédé selon l'invention tient compte en effet dans la détermination des doses consignes successives à délivrer en les différents points de la parcelle et en continu du déplacement de la machine d'épandage sur un trajet d'épandage prédéterminé, de la réalité physique des salves d'épandage déjà réalisées.

Il permet d'envisager une optimisation spatiale des épandages basée sur la réalité spatiale de la distribution de l'engrais par l'appareil.

Les améliorations en termes de performances d'épandage et notamment en précision, tant spatiale qu'en densité, mais aussi en régularité d'épandage sont très importantes, comparativement aux résultats produits au moyen des techniques selon l'art antérieur.

Dans une variante de l'invention et tel que déjà précisé précédemment, le procédé d'optimisation de l'épandage est réalisé pour des machines ne disposant que d'une puissance de calcul limitée, en considération d'une transversale (transect ou fenêtre glissante d'épandage) et la nappe à poste fixe (en forme et/ou en densité).

Les résultats obtenus sont alors de précisions inférieure, mais de suffisamment bonne qualité dans un contexte d'agriculture de précision, aussi bien du point de vue agronomique que du point de vue environnemental.

Une telle variante plus pragmatique du procédé d'optimisation selon l'invention permet en effet de limiter sensiblement les principaux défauts constatés traditionnellement lors des épandages.

Il peut être appliqué en temps réel lors de l'épandage, et ne nécessite qu'un nombre relativement faible d'informations préalables concernant la parcelle à traiter.

## Revendications

1. Procédé de contrôle de l'épandage assuré par une machine agricole d'épandage (10-16), équipée d'au moins un distributeur (12-16) de particules (11), la quantité de particules délivrée à un instant donné étant fonction d'une consigne tenant compte d'une position géographique de ladite machine d'épandage sur une parcelle à traiter et d'une carte prédéterminée des besoins en particules sur différentes portions, ou mailles, de ladite parcelle à traiter,
ledit procédé comprenant une étape d'optimisation des consignes, selon laquelle on associe à chaque point (34) d'un trajet (35) une consigne intermédiaire,
et la consigne globale (37) réellement délivrée à la fin du traitement de ladite parcelle correspondant à la somme desdites consignes intermédiaires obtenue par cumul en recouvrement en chaque point donné de ladite parcelle d'au moins deux salves de particules réalisées par ledit distributeur, à des instants différents,
**caractérisé en ce que** lors d'un premier passage de la machine d'épandage sur la parcelle à traiter, on réalise une première étape d'épandage en mode plein champ, de façon à délivrer au moins une première dose en chaque zone plein champ de ladite parcelle, puis on réalise lors d'au moins un deuxième passage de ladite machine d'épandage sur ladite parcelle à traiter, une étape d'ajustage en tenant compte de l'ensemble des doses intermédiaires déjà épandues en tout point de ladite parcelle, lors dudit premier ou desdits précédents passages sur ladite pluralité de trajets.

2. Procédé de contrôle de l'épandage selon la revendication 1, **caractérisé en ce que** ladite consigne tient compte également d'au moins une information représentative de la forme (301, 302) de la nappe d'épandage et/ou d'au moins une différence de densité (37) de particules en différents points de ladite nappe.

3. Procédé de contrôle de l'épandage selon l'une quelconque des revendications 1 et 2, **caractérisé en ce qu'**il comprend les étapes préparatoires suivantes :
- étape 1 : obtention de ladite carte prédéterminée, sous la forme d'une série de doses consignes affectées à chaque maille d'une représentation de ladite parcelle découpée en mailles de dimensions prédéterminées;
- étape 2 : obtention d'au moins une représentation spatiale et de densité de ladite nappe d'épandage associée au type dudit distributeur utilisé ;
- étape 3 : modélisation d'au moins un trajet optimal devant être effectué par ladite machine d'épandage dans ladite parcelle, sous la forme de points correspondants à des positions géographiques successives ;
- étape 4: détermination pour chacune desdites positions géographiques successives, des paramètres optimaux de forme et de densité de ladite nappe permettant de définir à un instant donné au moins une dose consigne intermédiaire affectée à au moins une partie d'une maille couverte par ladite nappe ;
de façon qu'à l'issue du traitement de l'ensemble de ladite parcelle les cumuls desdites consignes intermédiaires en tous points desdites mailles soient sensiblement égaux à la valeur des consignes desdites mailles respectivement.

4. Procédé de contrôle d'épandage selon la revendication 3, **caractérisé en ce que** ledit ensemble des doses déjà épandues est acquis en temps continu lors du déplacement de ladite machine d'épandage, sous la forme d'une matrice, dite « matrice champ », laquelle associe à chaque points de coordonnées GPS d'une pluralité de points de coordonnées GPS entourant chaque trajet de ladite machine d'épandage sur la parcelle à traiter, les sommes successives desdites doses consignes intermédiaires déjà épandues en chaque point de ladite pluralité de points de coordonnées GPS.

5. Procédé de contrôle de l'épandage selon la revendication 4, **caractérisé en ce que** chaque maille de ladite matrice champ est représentative de la somme desdites zones consignes intermédiaires affectée à une maille carrée d'un mètre sur un mètre dans le champ.

6. Procédé de contrôle de l'épandage selon l'une quelconque des revendications 4 et 5, **caractérisé en ce qu'**à chaque trajet suivi par ladite machine d'épandage sur ladite parcelle, on réalise en continu en cours de déplacement de la dite machine d'épandage un relevé des quantités de matière déjà épandues sur ladite parcelle, transversalement à l'axe de déplacement du distributeur de ladite machine d'épandage.

7. Procédé de contrôle de l'épandage selon la revendication 6, **caractérisé en ce que** ledit relevé est réalisé localement, au voisinage d'une succession de points de coordonnées GPS d'un trajet de déplacement de ladite machine d'épandage sur ladite parcelle à traiter, ledit voisinage se présentant sous la forme d'une fenêtre glissante de longueur et de largeur prédéterminées relativement audit axe d'avancement, dite « fenêtre transect » perpendiculaire à l'axe d'avancement dudit distributeur.

8. Procédé de contrôle de l'épandage selon la revendication 7, **caractérisé en ce que** durant chaque trajet en cours, on effectue les étapes suivantes :
□ étape a) extraction d'une matrice 50 d'exploration à chaque nouveau point de coordonnées GPS détecté ;
□ étape b) sommation 501, colonne par colonne des quantités de matière déjà épandues sur ladite parcelle lors du trajet en cours ou lors d'au moins un trajet précédent au moyen d'au moins un relevé 54 correspondant à une fenêtre transect 50 ;
□ étape c) détermination 502 du complément théorique 503 à apporter à chaque maille de ladite matrice champ, pour atteindre la dose consigne optimale prédéterminée en chaque point de ladite parcelle 500;
□ étape d) détermination 504 d'une courbe 505 transversale permettant de minimiser la différence entre ledit complément théorique 503 déterminé et la dose consigne réelle pouvant être réellement délivrée lors d'un trajet suivant en fonction des caractéristiques physiques dudit distributeur ;
□ étape e) extraction 506 et mémorisation 507 des paramètres physiques de réglage de l'épandage à appliquer audit distributeur lors d'un passage sur ledit trajet en tenant compte de la quantité 508 de matière épandue déjà présente le long d'une ligne perpendiculaire à l'axe 51 d'avancement du distributeur en un point donné de la trajectoire suivie par la machine d'épandage, du complément théorique 503 pour atteindre la dose consigne et de la courbe 505 transversale. Ainsi, l'ajustement des paramètres de réglage de la machine d'épandage lors d'un passage N d'un trajet donné s'effectue en tenant compte des paramètres acquis lors d'un passage N-1 sur le même trajet ;
□ étape f) mise à jour de ladite matrice champ à partir des résultats de ladite étape de sommation 501 et, sommation 508 pour chaque maille de ladite matrice d'épandage des quantités apportées spatialement et/ou en densité en tous les points correspondants de ladite parcelle ; ils s'agit notamment de réaliser une mise à jour de chaque maille de la matrice d'épandage, par sommation en densité de matériau épandu, en tous les points affectés de ladite parcelle ;
□ étape g) détermination ou acquisition 509 en cours de déplacement d'un nouveau point de coordonnées GPS de ladite machine d'épandage sur ladite parcelle ;
□ Itération 510 des étapes a) à g) pour l'ensemble des points de coordonnées GPS situés au moins sur chacun des trajets d'épandage prédéterminés en mode plein champ sur ladite parcelle.

9. Procédé de contrôle de l'épandage selon la revendication 10, **caractérisé en ce qu'**on itère lesdites étapes a) à g) pour l'ensemble des points de coordonnées GPS situés au moins sur un trajet de ladite machine d'épandage défini en bordure de ladite parcelle.

10. Procédé de contrôle de l'épandage selon la revendication 9, **caractérisé en ce qu'**il met en oeuvre une étape préliminaire du calcul de l'instant d'ouverture ou de fermeture d'au moins une des trappes d'alimentation dudit distributeur en tenant compte d'une fonction de détection de bord de ladite parcelle, de façon à imposer des décalages de positions des fins et débuts d'épandage, relative l'une à l'autre, et ainsi obtenir un bord sensiblement rectiligne après les passages plein champ, ledit bord sensiblement rectiligne préparant et favorisant ledit épandage en mode bordure.

11. Procédé de contrôle de l'épandage selon l'une quelconque des revendications 1 à 10, **caractérisé en ce que** ladite nappe est modélisée par le produit d'au moins deux gaussiennes.

12. Procédé de contrôle de l'épandage selon l'une quelconque des revendications 3 à 11, **caractérisé en ce que** lesdits paramètres optimaux de ladite nappe comprennent au moins :
- le rayon moyen Rmoy(ij) de ladite nappe (301), pour chaque position géographique de coordonnées (i,j) d'un disque du distributeur (302) équipant ladite machine d'épandage à un instant donné ;
- l'angle moyen θmoy(i,j) d'éjection d'une salve d'engrais en une position géographique de coordonnées (i,j) du distributeur (302), considéré relativement au vecteur de direction (303) du déplacement de ladite machine d'épandage ;
- l'écart type σ_{θ}moy(i,j) de l'angle d'éjection d'une salve d'engrais en une position géographique de coordonnées (i,j) du distributeur (302), considéré relativement au vecteur (303) de direction du déplacement de ladite machine d'épandage ;
- l'écart type σ_{R}moy(i,j) du rayon d'éjection de ladite nappe (301), pour chaque position géographique de coordonnées (ij) d'un disque du distributeur (302) équipant ladite machine d'épandage à un instant donné;
- le débit massique Dm(i,j) de particules en chaque point de coordonnées (i,j) de ladite nappe (301).
nappe correspondant à une nouvelle valeur de configuration d'au moins un organe dudit distributeur appartenant au groupe comprenant :
□ les actionneurs de régulation du débit ;
□ les actionneurs de positionnement de la goulotte d'alimentation en produit d'épandage;
□ les actionneurs de réglage de la vitesse de rotation des disques rotatifs ;
□ les moyens d'alimentation d'au moins une pale d'un disque rotatif ;
□ les moyens d'inclinaison d'un disque rotatif sur lui-même, suivant au moins deux axes ;
□ les moyens d'inclinaison dudit distributeur suivant au moins les deux axes de réglage de l'aplomb ;
□ les moyens de réglage en continu de la hauteur de ladite machine d'épandage.

13. Procédé de contrôle de l'épandage selon la revendication 12, **caractérisé en ce que** lors du déplacement de ladite machine d'épandage, il calcule en temps réel la variation nécessaire de la valeur d'au moins un desdits paramètres de ladite.

14. Procédé de contrôle de l'épandage selon la revendication 13, **caractérisé en ce qu'**il transmet en continu des commandes de changement de valeur de configuration à au moins un desdits organes dudit distributeur pendant le déplacement de ladite machine d'épandage, de façon à adapter la forme de ladite nappe et sa densité en particules à un instant donné, en fonction dudit cumul des consignes intermédiaires déjà atteint, relativement à ladite consigne prédéterminée.

15. Procédé de contrôle d'épandage selon l'une quelconque des revendications 1 à 14, **caractérisé en ce qu'**il comprend une étape de correction en temps réel desdites consignes, lorsque ladite machine d'épandage s'écarte dudit trajet (35).

16. Procédé de contrôle d'épandage selon l'une quelconque des revendications 1 à 15, **caractérisé en ce qu'**il génère une alarme si le sens de parcours du trajet (35) dans ladite parcelle n'est pas celui pris en compte pour la détermination desdites consignes.

17. procédé de contrôle d'épandage selon l'une quelconque des revendications 1 à 16, **caractérisé en ce qu'**il tient compte également d'au moins une caractéristique appartennant au groupe comprenant au moins :
- le type de distributeur de particules granulaires ;
- la largeur d'épandage ;
- la largeur de travail ;
- le débit d'épandage ;
- la nature desdites particules granulaires (engrais, sable, etc.) ;
- la masse volumique, la granulométrie, le coefficient de frottement sur la surface en rotation desdits disques d'épandage ;
- le trajet emprunté sur ladite parcelle par ladite machine d'épandage.

18. Procédé de contrôle d'épandage selon l'une quelconque des revendications 1 à 17, **caractérisé en ce qu'**il ajuste ladite dose consigne et lesdites doses consignes intermédiaires en fonction d'au moins une des données suivantes de forme, de topographie de ladite parcelle, d'obstacle(s) contenu(s) dans celle-ci, du type appartenant au groupe comprenant :
- les coins ;
- les pointes ;
- les zones de courbures ;
- les inclinaisons de pentes
- les bordures.

19. Procédé de contrôle d'épandage selon l'une quelconque des revendications 1 à 18, **caractérisé en ce qu'**il met en oeuvre une étape de mise à jour automatique de ladite carte prédéterminée dès lors que ladite machine d'épandage s'écarte au-delà d'un seuil de tolérance prédéterminé du trajet optimal prédéterminé.

20. Procédé de contrôle d'épandage selon l'une quelconque des revendications 1 à 19, **caractérisé en ce qu'**il prend en compte des valeurs des paramètres de ladite nappe mesurées en temps réel par au moins un réseau de capteurs de mesure du type appartenant au groupe comprenant au moins :
□ des capteurs d'imagerie rapide ;
□ des capteurs vidéo ;
□ des capteurs d'impact.
pour mesurer en continu l'ensemble desdites valeurs de consigne prédéterminées et ainsi rétroagir dès lors que lesdites valeurs mesurées ne sont plus en conformité avec lesdites valeurs de consigne.

21. Programme d'ordinateur comprenant des instructions de code de programme pour l'exécution des étapes du procédé de contrôle de l'épandage selon l'une quelconque des revendications 1 à 20, lorsque ledit programme est exécuté sur un ordinateur.

22. Machine agricole d'épandage, équipé d'au moins un distributeur de particules, la quantité de particules délivrée à un instant donné étant fonction d'une consigne tenant compte d'une position géographique de ladite machine sur une parcelle à traiter et d'une carte prédéterminée des besoins en particules sur différentes portions, ou mailles, de ladite parcelle à traiter, ladite machine agricole comprenant des moyens d'optimisation des consignes, associant à chaque point d'un trajet une consigne intermédiaire, tels qu'à la fin du traitement de ladite parcelle la consigne globale réellement délivrée correspond à la somme desdites consignes intermédiaires obtenue par cumul en recouvrement en chaque point donné de ladite parcelle d'au moins deux salves de particules réalisées par ledit distributeur, à des instants différents,
lesdits moyens d'optimisation des consignes contrôlant la quantité de particules délivrées audit au moins un distributeur de particules lors d'un premier passage de la machine d'épandage sur la parcelle à traiter , de façon à délivrer au moins une première dose en chaque zone plein champ de ladite parcelle, puis lors d'au moins un deuxième passage de ladite machine d'épandage sur ladite parcelle à traiter, en tenant compte de l'ensemble des doses intermédiaires déjà épandues en tout point de ladite parcelle, lors dudit premier ou desdits précédents passages sur ladite pluralité de trajets.

23. Machine agricole d'épandage selon la revendication 22, **caractérisée en ce que** lesdits moyens d'optimisation prennent en compte au moins une information représentative de la forme de la nappe d'épandage et/ou d'au moins une différence de densité de particules en différents points de ladite nappe.

24. Machine agricole d'épandage selon l'une quelconque des revendications 22 et 23, **caractérisée en ce qu'**elle comprend :
- des moyens d'obtention de ladite carte prédéterminée, sous la forme d'une série de doses consignes affectées à chaque maille d'une représentation de ladite parcelle découpée en mailles de dimensions prédéterminées;
- dès moyens d'obtention d'au moins une représentation spatiale et de densité de ladite nappe d'épandage associée au type dudit distributeur utilisé ;
- des moyens de modélisation d'au moins un trajet optimal devant être effectué par ladite machine d'épandage dans ladite parcelle, sous la forme de points correspondants à des positions géographiques successives ;
- des moyens de détermination pour chacune desdites positions géographiques successives, des paramètres optimaux de forme et de densité de ladite nappe permettant de définir à un instant donné au moins une dose consigne intermédiaire affectée à au moins une partie d'une maille couverte par ladite nappe ;
la mise en oeuvre de l'ensemble desdits moyens permettant qu'à l'issue du traitement de l'ensemble de ladite parcelle les cumuls desdites consignes intermédiaire en tout point desdites mailles soient sensiblement égaux à la valeur des consignes desdites mailles respectivement.

25. Machine agricole d'épandage selon l'une quelconque des revendications 22 à 24, **caractérisé en ce qu'**elle comprend des moyens de modélisation de ladite nappe sous la forme d'un produit d'au moins deux gaussiennes.

## Claims

1. Method for controlling the spreading effected by an agricultural spreading machine (10-16) equipped with at least one distributor (12-16) of particles (11), the quantity of particles delivered at a given instant being a function of a setpoint taking account of a geographical position of the said spreading machine on a parcel to be treated and of a predetermined map of the requirements for particles on different portions, or cells, of the said parcel to be treated,
the said method comprising a step of optimising the setpoints, according to which step an intermediate setpoint is associated with each point (34) of a path (35),
and the overall setpoint (37) actually delivered at the end of the treatment of the said parcel corresponding to the sum of the said intermediate setpoints obtained by summation of the covering at each given point of the said parcel of at least two salvos of particles produced by the said distributor, at different instants,
**characterised in that**, during a first pass of the spreading machine over the parcel to be treated, a first step of spreading in open-field mode is carried out, so as to deliver at least one first dose in each open-field zone of the said parcel, then, during at least one second pass of the said spreading machine over the said parcel to be treated, an adjusting step is carried out taking account of the whole of the intermediate doses already spread at any point of the said parcel during the said first or the said preceding passes over the said plurality of paths.

2. Method for controlling the spreading according to Claim 1, **characterised in that** the said setpoint also takes account of at least one item of information representative of the shape (301, 302) of the spreading sheet and/or of at least a difference in density (37) of particles at different points of the said sheet.

3. Method for controlling the spreading according to either one of Claims 1 and 2,
**characterised in that** it comprises the following preparatory steps:
- step 1: obtaining the said predetermined map in the form of a series of setpoint doses assigned to each cell of a representation of the said parcel cut up into cells of predetermined dimensions;
- step 2: obtaining at least one spatial and density representation of the said spreading sheet associated with the type of the said distributor used;
- step 3: modelling at least one optimal path which is to be taken by the said spreading machine in the said parcel, in the form of points corresponding to successive geographical positions;
- step 4: determining for each of the said successive geographical positions optimal shape and density parameters of the said sheet which make it possible to define at a given instant at least one intermediate setpoint dose assigned to at least one part of a cell covered by the said sheet;
so that at the end of the treatment of the whole of the said parcel the sums of the said intermediate setpoints at all points of the said cells are substantially equal to the value of the setpoints of the said cells respectively.

4. Method for controlling the spreading according to Claim 3, **characterised in that** the said whole of the doses already spread is acquired continuously during the movement of the said spreading machine, in the form of a matrix, called a "field matrix", which associates, with each GPS coordinates points of a plurality of GPS coordinates points surrounding each path of the said spreading machine on the parcel to be treated, the successive sums of the said intermediate setpoint doses already spread at each point of the said plurality of GPS coordinates points.

5. Method for controlling the spreading according to Claim 4, **characterised in that** each cell of the said field matrix is representative of the sum of the said intermediate setpoint zones assigned to a square cell of one metre by one metre in the field.

6. Method for controlling the spreading according to either one of Claims 4 and 5,
**characterised in that**, on each path followed by the said spreading machine on the said parcel, there is produced continuously during the movement of the said spreading machine a plot of the quantities of material already spread over the said parcel, transversely to the axis of movement of the distributor of the said spreading machine.

7. Method for controlling the spreading according to Claim 6, **characterised in that** the said plot is produced locally, in the vicinity of a succession of GPS coordinates points of a path of movement of the said spreading machine over the said parcel to be treated, the said vicinity being in the form of a sliding window of predetermined length and width relative to the said axis of advance, called a "transect window" perpendicular to the axis of advance of the said distributor.

8. Method for controlling the spreading according to Claim 7, **characterised in that** on each current path, the following steps are carried out:
□ step a) extraction of a scan matrix 50 at each new detected GPS coordinates point;
□ step b) summation 501 column by column of the quantities of material already spread over the said parcel on the current path or on at least one preceding path by means of at least one plot 54 corresponding to a transect window 50;
□ step c) determination 502 of the theoretical complement 503 to be provided to each cell of the said field matrix in order to attain the predetermined optimal setpoint dose at each point of the said parcel 500;
□ step d) determination 504 of a transverse curve 505 making it possible to minimise the difference between the said determined theoretical complement 503 and the actual setpoint dose capable of being actually delivered on a following path as a function of the physical characteristics of the said distributor;
□ step e) extraction 506 and storage 507 of the physical parameters for regulating the spreading to be applied to the said distributor during a pass on the said path, taking account of the quantity 508 of spread material already present along a line perpendicular to the axis 51 of advance of the distributor at a given point of the trajectory followed by the spreading machine, of the theoretical complement 503 for attaining the setpoint dose and of the transverse curve 505. Thus, the adjustment of the parameters for regulating the spreading machine during a pass N of a given path is carried out, taking account of the parameters acquired during a pass N-1 on the same path;
□ step f) updating of the said field matrix on the basis of the results of the said summation step 501, and summation 508 for each cell of the said matrix for spreading the quantities provided spatially and/or in terms of density at all the corresponding points of the said parcel; in particular, this involves updating each cell of the spreading matrix, by summation of density of spread material, at all the assigned points of the said parcel;
□ step g) determination or acquisition 509 in the course of movement of a new GPS coordinates point of the said spreading machine on the said parcel;
□ Iteration 510 of steps a) to g) for all of the GPS coordinates points situated at least on each of the predetermined spreading paths in open-field mode on the said parcel.

9. Method for controlling the spreading according to Claim 10, **characterised in that** the said steps a) to g) are iterated for all of the GPS coordinates points situated at least on a path of the said spreading machine defined at the edge of the said parcel.

10. Method for controlling the spreading according to Claim 9, **characterised in that** it implements a preliminary step of calculating the opening and closing instant of at least one of the feed traps of the said distributor, taking account of a function for detecting the edge of the said parcel, so as to impose offsets of positions of the ends and beginnings of spreading relative to one another, and thus obtain a substantially rectilinear edge after the open-field passes, the said substantially rectilinear edge preparing and promoting the said edge-mode spreading.

11. Method for controlling the spreading according to any one of Claims 1 to 10,
**characterised in that** the said sheet is modelled by the product of at least two Gaussians.

12. Method for controlling the spreading according to any one of Claims 3 to 11,
**characterised in that** the said optimal parameters of the said sheet comprise at least:
- the mean radius Rmean(i,j) of the said sheet (301), for each geographical position of coordinates (i,j) of a disc of the distributor (302) with which the said spreading machine is equipped at a given instant;
- the mean angle θmean(i,j) of ejection of a salvo of fertiliser at a geographical position of coordinates (i,j) of the distributor (302), considered relative to the direction vector (303) of the movement of the said spreading machine;
- the standard deviation σ_{θ}mean(i,j) of the angle of ejection of a salvo of fertiliser at a geographical position of coordinates (i,j) of the distributor (302), considered relative to the direction vector (303) of the movement of the said spreading machine;
- the standard deviation σ_{R}mean(i,j) of the radius of ejection of the said sheet (301), for each geographical position of coordinates (i,j) of a disc of the distributor (302) with which the said spreading machine is equipped at a given instant;
- the mass delivery Dm(i,j) of particles at each point of coordinates (i,j) of the said sheet (301).

13. Method for controlling the spreading according to Claim 12, **characterised in that** during the movement of the said spreading machine, the method calculates in real time the necessary variation of the value of at least one of the said parameters of the said sheet corresponding to a new value for configuration of at least one member of the said distributor belonging to the group comprising:
□ the actuators for regulating the delivery;
□ the actuators for positioning the spreading product feed chute;
□ the actuators for regulating the rotational speed of the rotating discs;
□ the means for feeding at least one blade of a rotating disc;
□ the means for inclining a rotating disc on itself, along at least two axes;
□ the means for inclining the said distributor along at least the two axes for adjusting the perpendicularity;
□ the means for continuously adjusting the height of the said spreading machine.

14. Method for controlling the spreading according to Claim 13, **characterised in that** it continuously transmits commands for changing the configuration value to at least one of the said members of the said distributor during the movement of the said spreading machine, so as to adapt the shape of the said sheet and its density of particles at a given instant, as a function of the said sum of the intermediate setpoints already attained, relative to the said predetermined setpoint.

15. Method for controlling the spreading according to any one of Claims 1 to 14,
**characterised in that** it comprises a step for correcting the said setpoints in real time, when the said spreading machine deviates from the said path (35).

16. Method for controlling the spreading according to any one of Claims 1 to 15,
**characterised in that** it generates an alarm if the direction of the course of the path (35) in the said parcel is not that taken into account for the determination of the said setpoints.

17. Method for controlling the spreading according to any one of Claims 1 to 16,
**characterised in that** it also takes account of at least one characteristic belonging to the group comprising at least:
- the type of distributor of granular particles;
- the spreading width;
- the working width;
- the spreading delivery;
- the nature of the said granular particles (fertiliser, sand, etc.);
- the density, granulometry, coefficient of friction on the rotating surface of the said spreading discs;
- the path taken on the said parcel by the said spreading machine.

18. Method for controlling the spreading according to any one of Claims 1 to 17,
**characterised in that** it adjusts the said setpoint dose and the said intermediate setpoint doses as a function of at least one of the following data: of shape, of topography of the said parcel, of obstacle(s) contained in the latter, of the type belonging to the group comprising:
- the comers;
- the points;
- the curved areas;
- the inclinations of slopes;
- the edges.

19. Method for controlling the spreading according to any one of Claims 1 to 18,
**characterised in that** it implements a step for automatic updating of the said predetermined map as soon as the said spreading machine deviates beyond a predetermined tolerance threshold from the predetermined optimal path.

20. Method for controlling the spreading according to any one of Claims 1 to 19,
**characterised in that** it takes account of the values of the parameters of the said sheet measured in real time by at least one network of measuring sensors of the type belonging to the group comprising at least:
□ rapid imaging sensors;
□ video sensors;
□ impact sensors
for continuously measuring all of the said predetermined setpoint values and thus retroacting as soon as the said measured values no longer conform to the said setpoint values.

21. Computer program comprising program code instructions for the execution of the steps of the method for controlling the spreading according to any one of Claims 1 to 20, when the said program is run on a computer.

22. Agricultural spreading machine, equipped with at least one distributor of particles, the quantity of particles delivered at a given instant being a function of a setpoint taking account of a geographical position of the said machine on a parcel to be treated and of a predetermined map of the requirements for particles on different portions, or cells, of the said parcel to be treated,
the said agricultural machine comprising means of optimising the setpoints, associating an intermediate setpoint with each point of a path, such that at the end of the treatment of the said parcel the overall setpoint actually delivered corresponds to the sum of the said intermediate setpoints obtained by summation of the covering at each given point of the said parcel of at least two salvos of particles produced by the said distributor, at different instants,
the said means of optimising the setpoints controlling the quantity of particles delivered to the said at least one distributor of particles during a first pass of the spreading machine over the parcel to be treated, so as to deliver at least one first dose in each open-field zone of the said parcel, then, during at least one second pass of the said spreading machine over the said parcel to be treated, taking account of the whole of the intermediate doses already spread at any point of the said parcel during the said first or the said preceding passes over the said plurality of paths.

23. Agricultural spreading machine according to Claim 22, **characterised in that** the said optimising means take account of at least one item of information representative of the shape of the spreading sheet and/or of at least a difference in density of particles at different points of the said sheet.

24. Agricultural spreading machine according to either one of Claims 22 and 23,
**characterised in that** it comprises:
- means of obtaining the said predetermined map in the form of a series of setpoint doses assigned to each cell of a representation of the said parcel cut up into cells of predetermined dimensions;
- means of obtaining at least one spatial and density representation of the said spreading sheet associated with the type of the said distributor used;
- means of modelling at least one optimal path which is to be taken by the said spreading machine in the said parcel, in the form of points corresponding to successive geographical positions;
- means of determining for each of the said successive geographical positions optimal shape and density parameters of the said sheet which make it possible to define at a given instant at least one intermediate setpoint dose assigned to at least one part of a cell covered by the said sheet;
the implementation of all of the said means making it possible that at the end of the treatment of the whole of the said parcel the sums of the said intermediate setpoints at any point of the said cells are substantially equal to the value of the setpoints of the said cells respectively.

25. Agricultural spreading machine according to any one of Claims 22 to 24,
**characterised in that** it comprises means of modelling the said sheet in the form of a product of at least two Gaussians.

## Patentansprüche

1. Steuerungsverfahren für das des Streuen, der von einem landwirtschaftlichen Streuer (10-16) ausgeführt wird, wobei dieser Streuer mit mindestens einen Verteiler (12-16) für Teilchen (11) ausgerüstet ist, wobei die Zahl der zu einem gegebenen Zeitpunkt abgegebenen Teilchen Funktion eines Befehls ist, der die geographische Lage des besagten Streuers auf einer zu behandelnden Bodenfläche und einer vorgegebenen Karte des Teilchenbedarfes auf verschiedenen Teilen oder Maschen der besagten zu behandelnden Bodenfläche berücksichtigt,
wobei das besagte Verfahren einen Schritt zum Optimieren der Befehle umfasst, dass man jedem Punkt (34) einer Wegstrecke (35) einen Zwischenbefehl zuordnet und,
wobei der Gesamtbefehl (37), der tatsächlich am Ende der Behandlung der besagten Bodenfläche erteilt wird, der Summe der besagten Zwischenbefehle entspricht, wobei man diese Summe durch überdeckende Kumulierung von mindestens zwei von dem besagten Streuer abgegebenen Teilchenschauer an jedem gegebenen Punkt der besagten Bodenfläche zu verschiedenen Zeitpunkten erhält,
**dadurch gekennzeichnet, dass** bei einem ersten Durchgang des Streuers über die zu behandelnde Bodenfläche ein erster Streuschritt im Gesamtfeldmodus erfolgt, um mindestens eine erste Dosis über jeden vollständigen Bereich der besagten Bodenfläche auszustreuen, und wobei bei mindestens einem zweiten Durchgang des besagten Streuers über die besagte zu behandelnde Bodenfläche ein Einstellungsschritt stattfindet, unter Berücksichtigung der Menge der bereits an jedem Punkt der besagten Bodenfläche beim besagten ersten Durchgang oder bei den besagten vorherigen Durchgängen über die besagte Vielzahl von Wegstrecken gestreuten Zwischendosen.

2. Steuerungsverfahren für das Streuen nach Anspruch 1, **dadurch gekennzeichnet, dass** der besagte Befehl auch mindestens eine für die Form (301, 302) der bestreuten Fläche und/oder für mindestens einen Unterschied bei der Dichte (37) der Teilchen an verschiedenen Stellen der besagten bestreuten Fläche repräsentative Information berücksichtigt.

3. Steuerungsverfahren für das Streuen nach einem der Ansprüche 1 oder 2,
**dadurch gekennzeichnet, dass** es die folgenden Vorbereitungsschritte umfasst:
- Schritt 1: Aufstellen der besagten vorgegebenen Karte in Form einer Reihe von Befehlsdosen, die einer jeden Masche einer Darstellung der besagten, in Maschen vorgegebenen Abmessungen aufgeteilten Bodenfläche, zugeordnet werden;
- Schritt 2: Erhalten mindestens einer Darstellung im Raum und nach Dichten der besagten bestreuten Fläche, welche der Art des eingesetzten Streuers zugeordnet ist;
- Schritt 3: Modelldarstellung von mindestens einer optimalen Wegstrecke, die vom besagten Streuer auf der besagten Bodenfläche zu durchlaufen ist, in Form von Punkten, welche aufeinander folgenden geographischen Lagen entsprechen;
- Schritt 4: Bestimmung, für jede der besagten aufeinander folgenden geographischen Lagen, der optimalen Form- und Dichteparameter der besagten bestreuten Fläche, die zu einem gegebenen Zeitpunkt das Definieren von mindestens einer Zwischenbefehlsdosis ermöglichen, welche mindestens einem Teil einer von der besagten bestreuten Fläche abgedeckten Masche zugeordnet ist;
so dass am Ende der Behandlung der besagten gesamten Bodenfläche, die Kumulierungen der besagten Zwischenbefehle an allen Punkten der besagten Maschen jeweils in etwa dem Wert der Befehle für die besagten Maschen gleichen.

4. Steuerungsverfahren für das Streuen nach Anspruch 3, **dadurch gekennzeichnet, dass** man die besagte Menge der bereits gestreuten Dosen in kontinuierlicher Zeit bei der Bewegung des besagten Streuers in Form einer "Feldmatrix" genannten Matrix erfasst, wobei diese Matrix einem jeden Punkt der GPS-Koordinaten aus einer Menge von GPS-Koordinatenpunkten, welche eine jede Wegstrecke des besagten Streuers auf der zu behandelnden Bodenfläche umgeben, die aufeinander folgenden Summen der besagten, an jedem Punkt der besagten Vielzahl von GPS-Koordinatenpunkten bereits ausgestreuten Zwischenbefehlsmengen, zuordnet.

5. Steuerungsverfahren für das Streuen nach Anspruch 4, **dadurch gekennzeichnet, dass** jede Masche der besagten Feldmatrix repräsentativ für die Summe der besagten Zwischenbefehlsbereiche ist, die einer quadratischen Masche von einem Meter mal einem Meter im Feld zugeordnet ist.

6. Steuerungsverfahren für das Streuen nach einem der Ansprüche 4 oder 5,
**dadurch gekennzeichnet, dass** bei jeder vom besagten Streuer auf der besagten Bodenfläche durchlaufenen Wegstrecke, man während der Bewegung des besagten Streuers in kontinuierlicher Form eine Aufzeichnung der auf der besagten Bodenfläche, quer zur Bewegungsachse des Verteilers des besagten Streuers, bereits ausgestreuten Streuguts erfolgt.

7. Steuerungsverfahren für das Streuen nach Anspruch 6, **dadurch gekennzeichnet, dass** die besagte Aufzeichnung örtlich in der Nachbarschaft einer Reihenfolge von GPS-Koordinatenpunkten einer Wegstrecke des besagten Streuers auf der besagten zu behandelnden Bodenfläche erfolgt, wobei die besagte Nachbarschaft in Form eines "geradlinige Abtastfenster" genannten Gleitfensters vorgegebener Länge und Breite im Verhältnis zur besagten Vorlaufsachse auftritt, wobei das besagte "geradlinige Abtastfenster" senkrecht zur Fortbewegungsachse des besagten Streuers verläuft.

8. Steuerungsverfahren für das Streuen nach Anspruch 7, **dadurch gekennzeichnet, dass** während jeder der laufenden Wegstrecken die folgenden Schritte durchgeführt werden:
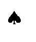 Schritt a): Extrahieren einer Erkundungsmatrix 50 bei jedem neuen erfassten GPS-Koordinatenpunkt;
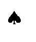 Schritt b): Summenbildung 501, Spalte für Spalte, des bereits auf der besagten Bodenfläche während der Wegstrecke oder während mindestens einer früheren Wegstrecke gestreuten Streuguts, mit Hilfe von mindestens einer einem geradlinigen Abtastfenster 50 entsprechenden Aufzeichnung 54;
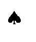 Schritt c): Bestimmung 502 der theoretischen Ergänzung 503, die in einer jeden Masche der besagten Feldmatrix hinzuzufügen ist, um die vorgegebene optimale Befehlsdosis in jedem Punkt der besagten Bodenfläche 500 zu erzielen;
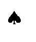 Schritt d): Bestimmung 504 einer quer verlaufenden Kurve 505, welche das Minimieren der Differenz zwischen der besagten festgestellten theoretischen Ergänzung 503 und der reellen Befehlsdosis ermöglicht, welche tatsächlich im Verlauf einer nachfolgenden Wegstrecke abgegeben werden kann, als Funktion der physikalischen Eigenschaften des besagten Verteilers;
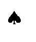 Schritt e): Extrahieren 506 und Speichern 507 der physikalischen Regelungs- und Streuparameter, die beim besagten Streuer bei einem Durchgang über die besagte Wegstrecke einzustellen sind, unter Berücksichtigung der Menge 508 an Streugut, das entlang einer der Fortbewegungsachse 51 des Verteilers an einem gegebenen Punkt der vom Streuer durchlaufenen Wegstrecke senkrechten Linie bereits gestreut wurde, ferner der theoretischen Ergänzung 503 zum Erreichen der Befehlsdosis und der Querkurve 505; somit erfolgt die Einstellung der Einstellparameter des Streuers bei einem Durchlauf N einer gegebenen Wegstrecke unter Berücksichtigung der bei einem Durchlauf N-1 derselben Wegstrecke erhaltenen Parameter;
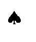 Schritt f: Aktualisierung der besagten Feldmatrix, ausgehend von den Ergebnissen des besagten Summationsschritts 501 und Summierung 508, für jede Masche der besagten Streumatrix, der räumlich und/oder nach Dichte aufgebrachten Mengen, an allen entsprechenden Punkten der besagten Bodenfläche; dabei handelt es sich insbesondere um die Aktualisierung einer jeden Masche der Streumatrix durch Summierung nach Dichte des gestreuten Streuguts an allen betroffenen Punkten der besagten Bodenfläche;
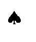 Schritt g: Bestimmung oder Erfassung 509 eines neuen GPS-Koordinatenpunktes während der Bewegung des besagten Streuers über der besagten Bodenfläche;
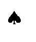 Wiederholung 510 der Schritte a) bis g) für die Gesamtmenge der GPS-Koordinatenpunkte, die sich auf mindestens einer jeden der im Gesamtfeldmodus im Voraus bestimmten Streuwegstrecken auf der besagten Bodenfläche befinden.

9. Steuerungsverfahren für das Streuen nach Anspruch 8, **dadurch gekennzeichnet, dass** die besagten Schritte a) bis g) für die Gesamtmenge der GPS-Koordinatenpunkte wiederholt werden, die sich mindestens auf einer am Rand der besagten Bodenfläche definierten Wegstrecke des besagten Streuers befinden.

10. Steuerungsverfahren für das Streuen nach Anspruch 9, **dadurch gekennzeichnet, dass** ein vorausgehender Schritt der Berechnung des Augenblicks des Öffnens oder Schließens von mindestens einer der Streugutzufuhrklappen des besagten Verteilers zum Einsatz kommt, wobei eine Funktion zum Erfassen des Randes der besagten Bodenfläche berücksichtigt wird, um Positionsverschiebungen der Abschlüsse und der Anfänge des Streuvorganges zu erzwingen und somit einen in etwa geradlinigen Rand nach den Durchgängen im Gesamtfeldmodus zu erhalten, wobei der besagte, in etwa geradlinige Rand das besagte Streuen im Randabdeckungsmodus vorbereitet und begünstigt.

11. Steuerungsverfahren für das Streuen nach einem der Ansprüche 1 bis 10,
**dadurch gekennzeichnet, dass** die besagte bestreute Fläche durch das Produkt von mindestens zwei Gauß'schen Funktionen modelliert wird.

12. Steuerungsverfahren für das Streuen nach einem der Ansprüche 3 bis 11,
**dadurch gekennzeichnet, dass** die besagten optimalen Parameter der besagten bestreuten Fläche mindestens folgendes umfassen:
- den mittleren Radius Rmoy (i, j) der besagten bestreuten Fläche (301) für jede geographische Lage mit den Koordinaten (i, j) einer Scheibe des Verteilers (302) des besagten Streuers zu einem gegebenen Zeitpunkt;
- den mittleren Abwurfwinkel θmoy (i, j) einer Streuportion Düngers in einer geographischen Lage mit den Koordinaten (i, j) des Verteilers (302), im Verhältnis zum Richtungsvektor (303) der Bewegung des besagten Streuers betrachtet;
- den Typenabstand σ_{θ}moy (i, j) des Abwurfwinkels einer Streuportion Düngers in einer geographischen Lage mit den Koordinaten (i, j) des Verteilers (302), im Verhältnis zum Richtungsvektor (303) der Bewegung des besagten Streuers betrachtet;
- den Typenabstand σ_{R}moy (i, j) des Abwurfradius der besagten bestreuten Fläche (301), für jede geographische Lage mit den Koordinaten (i, j) einer Scheibe des Verteilers (302) des besagten Streuers zu einem gegebenen Zeitpunkt;
- den Teilchenmassendurchsatz Dm (i, j) an jeden Punkt mit den Koordinaten (i, j) der besagten bestreuten Fläche (301).

13. Steuerungsverfahren für das Streuen nach Anspruch 12, **dadurch gekennzeichnet, dass** es, während der Bewegung des besagten Streuers, in Realzeit die erforderliche Variation des Wertes von mindestens einem der besagten Parameter der besagten bestreuten Fläche berechnet, entsprechend einem neuen Konfigurationswert von mindestens einem Organ des besagten Verteilers, wobei dieses Organ zu der die folgenden Teile umfassenden Gruppe gehört:
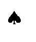 die Durchsatz-Einstellorgane;
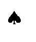 die Positionseinstellorgane der Zufuhrrinne für das Streugut;
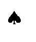 die Einstellorgane der Umdrehungsgeschwindigkeit der Drehscheiben;
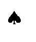 die Zufuhrmittel von mindestens einem Blatt einer Drehscheibe;
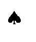 die Mittel zum Neigen einer Drehscheibe über sich selbst entlang von mindestens zwei Achsen;
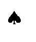 die Mittel zum Neigen des besagten Verteilers nach den mindestens zwei Einstellachsen für die vertikale Stellung;
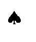 die Mittel zur kontinuierlichen Höheneinstellung des besagten Streuers.

14. Steuerungsverfahren für das Streuen nach Anspruch 13, **dadurch gekennzeichnet, dass** es kontinuierlich Befehle zum Ändern des Konfigurationswertes an mindestens eines der besagten Organe des besagten Verteilers während der Bewegung des besagten Streuers sendet, um die Form der besagten bestreuten Fläche und die entsprechende Teilchendichte zu einem gegebenen Zeitpunkt als Funktion der besagten Kumulierung von bereits erreichten Zwischenbefehlen im Verhältnis zum besagten vorgegebenen Befehl anzupassen.

15. Steuerungsverfahren für das Streuen nach einem der Ansprüche 1 bis 14,
**dadurch gekennzeichnet, dass** es einen Korrekturschritt in Realzeit der besagten Befehle umfasst, wenn sich der besagte Streuer von der besagten Wegstrecke (35) entfernt.

16. Steuerungsverfahren für das Streuen nach einem der Ansprüche 1 bis 15,
**dadurch gekennzeichnet, dass** es eine Alarmmeldung abgibt, wenn die Laufrichtung (35) innerhalb der besagten Bodenfläche nicht diejenige ist, die beim Bestimmen der besagten Befehle ist.

17. Steuerungsverfahren für das Streuen nach einem der Ansprüche 1 bis 16,
**dadurch gekennzeichnet, dass** es ebenfalls mindestens eine der Eigenschaften aus der das Folgende umfassenden Gruppe berücksichtigt:
- die Art des Verteilers der körnigen Teilchen;
- die Streubreite;
- die Arbeitsbreite;
- den Streudurchsatz;
- die Art der besagten Körnerteilchen (Dünger, Sand usw.);
- die Volumenmasse, die Körnung, den Reibungskoeffizient auf der drehenden Fläche der besagten Streuscheiben;
- die auf der besagten Bodenfläche von dem besagten Streuer durchfahrenen Wegstrecke.

18. Steuerungsverfahren für das Streuen nach einem der Ansprüche 1 bis 17,
**dadurch gekennzeichnet, dass** es die besagte Befehlsdosis und die besagten Zwischenbefehlsdosen als Funktion von mindestens einem der besagten Datenwerte für Form, Topographie der besagten Bodenfläche sowie von (einer) darin befindlichen Hürde(n) einstellt, wobei diese Datenwerte der folgendes umfassenden Gruppe angehören:
- Ecken;
- Spitzen;
- Biegungsbereiche;
- Geländeneigungen;
- Ränder.

19. Steuerungsverfahren für das Streuen nach einem der Ansprüche 1 bis 18,
**dadurch gekennzeichnet, dass** es einen Schritt der automatischen Aktualisierung der besagten vorgegebenen Karte zum Einsatz bringt, wenn der besagte Streuer um mehr als einen vorgegebenen Toleranzschwellenwert von der optimal bestimmten Wegstrecke abweicht.

20. Steuerungsverfahren für das Streuen nach einem der Ansprüche 1 bis 19,
**dadurch gekennzeichnet, dass** es Werte der Parameter der besagten bestreuten Fläche berücksichtigt, die durch ein Netz von Messfühlern in Realzeit gemessen wurden, wobei diese Fühler der Gruppe angehören, die mindestens folgendes umfassen:
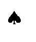 schnelle Bildfühler;
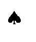 Videofühler;
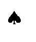 Aufprallfühler,
um die Gesamtmenge der besagten vorausbestimmten Befehlswerte kontinuierlich zu messen und somit rückwirkend zu reagieren, wenn die besagten Messwerte nicht mehr mit den besagten Befehlswerten konform sind.

21. EDV-Programm, das über Programmcodebefehle zum Ausführen der Schritte des Steuerungsverfahrens für das Streuen nach einem der Ansprüche 1 bis 20 verfügt, wenn das besagte Programm von einem Rechner ausgeführt wird.

22. Landwirtschaftlicher Streuer, der mit mindestens einem Teilchenverteiler ausgerüstet ist, wobei die zu einem gegebenen Zeitpunkt abgegebene Teilchenmenge Funktion eines Befehls ist, der eine geographische Lage des besagten Streuers auf einer zu behandelnden Bodenfläche und einer vorgegebenen Karte des Teilchenbedarfes auf verschiedenen Teilen oder Maschen der besagten zu behandelnden Bodenfläche berücksichtigt,
wobei die besagte landwirtschaftliche Maschine über Mittel zum Optimieren der Befehlsmengen umfasst, die einem jeden Punkt einer Wegstrecke eine Zwischenbefehlsmenge zuordnen, so dass am Ende der Behandlung der besagten Bodenfläche die tatsächlich abgegebene Befehlsmenge der Summe der besagten Zwischenbefehlsmengen entspricht, die durch sich gegenseitig überlappende Kumulierung an jeden gegebenen Punkt der besagten Bodenfläche von mindestens zwei von dem besagten Verteiler an verschiedenen Zeitpunkten abgegebenen Teilchenschauer entspricht,
wobei die besagten Mittel zum Optimieren der Befehle, welche die Menge der an den mindestens einen Teilchenverteiler bei einem ersten Durchgang des Streuers über die zu behandelnde Bodenfläche steuern, um mindestens eine erste Dosis über jeden Gesamtfeldbereich der besagten Bodenfläche und um weiter eine Dosis bei einem mindestens zweiten Durchgang des besagten Streuers über die besagte zu behandelnde Bodenfläche abzugeben, wobei die Gesamtmenge der bereits an einem jeden Punkt der besagten Bodenfläche bei dem besagten ersten Durchgang oder bei den vorhergehenden Durchgängen über die besagte Vielzahl von Wegstrecken gestreuten Zwischendosen berücksichtigt wird.

23. Landwirtschaftlicher Streuer nach Anspruch 22, **dadurch gekennzeichnet, dass** die besagten Mittel zum Optimieren mindestens eine Information berücksichtigen, die für die Form der bestreuten Fläche und/oder für mindestens einen Unterschied bei den Teilchendichten an verschiedenen Punkten der besagten bestreuten Fläche repräsentativ ist.

24. Landwirtschaftlicher Streuer nach einem der Ansprüche 22 oder 23, **dadurch gekennzeichnet, dass** er folgendes umfasst:
- Mittel zum Erhalten der besagten vorgegebenen Karte, in Form einer Reihe von Befehlsdosen, die jeweils einer Masche einer Darstellung der besagten Bodenfläche zugeordnet sind, wobei die besagte Bodenfläche in Maschen vorgegebener Abmessungen aufgeteilt ist;
- Mittel zum Erhalten mindestens einer räumlichen Darstellung und einer Darstellung nach Dichten der besagten bestreuten Fläche, wobei die Darstellung mit der Art des besagten verwendeten Verteilers zusammenhängt;
- Mittel zum Modellieren von mindestens einer optimalen Wegstrecke, die von dem besagten Streuer innerhalb der besagten Bodenfläche zu durchlaufen ist, in Form von Punkten, die aufeinander folgenden geographischen Lagen entsprechen;
- Mittel zum Bestimmen von optimalen Form- und Dichteparametern der besagten bestreuten Fläche für jede der besagten geographischen aufeinander folgenden Lagen, welche es ermöglichen, zu einem gegebenen Zeitpunkt mindestens eine Zwischenbefehlsdosis zu bestimmen, welche mindestens einem Teil einer von der besagten bestreuten Fläche abgedeckten Masche zuzuordnen ist;
wobei der Einsatz der besagten Mittel es ermöglicht, dass am Ende der Behandlung der Gesamtheit der besagten Bodenfläche, die kumulierten Mengen der besagten Zwischenbefehlsmengen an jedem Punkt der besagten Maschen jeweils in etwa dem Befehlswert der besagten Maschen gleichen.

25. Landwirtschaftlicher Streuer nach einem der Ansprüche 22 bis 24, **dadurch gekennzeichnet, dass** er über Mittel zum Modellieren der besagten bestreuten Fläche in Form des Produktes von mindestens zwei Gauß'schen Funktionen verfügt.
